# EUROPEAN PATENT APPLICATION

(11) **EP 4 633 213 A1**
(43) Date of publication of application: **15.10.2025**
(21) Application number: 23899864.5
(22) Date of filing: 30.11.2023
(51) Int. Cl.: H04W 8/24

(54) **INFORMATION TRANSMISSION METHOD AND APPARATUS, AND TERMINAL AND NETWORK-SIDE DEVICE**

(30) Priority: 07.12.2022 CN 202211567268
(71) Applicant: Vivo Mobile Communication Co., Ltd., Dongguan, Guangdong 523863 (CN)
(72) Inventor: CHONG, Weiwei, Dongguan, Guangdong 523863 (CN)
(74) Representative: Shieldmark
(86) International application number: PCT/CN2023/135261
(87) International publication number: WO 2024/120285

(57) **Abstract**

This application discloses an information transmission method and apparatus, a terminal, and a network-side device, and pertains to the field of communication technologies. The information transmission method according to the embodiments of this application includes: obtaining, by a terminal, information of a target network element corresponding to a machine learning ML model, where the target network element supports the function of user-plane model transmission; and performing, by the terminal, model transmission with the target network element via a user plane session or tunnel, where the tunnel is a tunnel established between the terminal and the target network element based on the user plane session, and the model transmission includes at least one of the following: receiving information of the ML model from the target network element; and sending the information of the ML model to the target network element.

## Description

### CROSS-REFERENCE TO RELATED APPLICATIONS

This application claims priority to Chinese Patent Application No. 202211567268.4, filed in China on December 7, 2022, which is incorporated herein by reference in its entirety.

### TECHNICAL FIELD

This application pertains to the field of communication technologies, and specifically relates to an information transmission method and apparatus, a terminal, and a network-side device.

### BACKGROUND

At present, the field of communication technologies is researching machine learning (machine learning, ML) model-based enhancements to communication performance, aiming to further improve the communication performance of terminals. Currently, no solution is available regarding how terminals can download or upload ML models. In other words, terminals cannot transmit ML model information-they cannot obtain ML model information from other devices or send ML model information to other devices, resulting in unsatisfying model transmission performance of terminals.

### SUMMARY

Embodiments of this application provide an information transmission method and apparatus, a terminal, and a network-side device, so as to solve the problem of unsatisfying model transmission performance of a terminal.

According to a first aspect, an information transmission method is provided, including:
obtaining, by a terminal, information of a target network element corresponding to a machine learning ML model, where the target network element supports the function of user-plane model transmission; and
performing, by the terminal, model transmission with the target network element via a user plane session or tunnel, where the tunnel is a tunnel established between the terminal and the target network element based on the user plane session, and the model transmission includes at least one of the following:
   receiving information of the ML model from the target network element; and
   sending the information of the ML model to the target network element.

According to a second aspect, an information transmission method is provided, including:
performing, by a target network element, model transmission with a terminal via a user plane session or tunnel, where the target network element supports the function of user-plane model transmission, the tunnel is a tunnel established between the target network element and the terminal based on the user plane session, and the model transmission includes at least one of the following:
sending information of the ML model to a terminal; and
receiving the information of the ML model from the terminal.

According to a third aspect, an information transmission method is provided, including:
obtaining, by an access and mobility management function, information of a target network element corresponding to a machine learning ML model, where the target network element supports the function of user-plane model transmission; and
sending, by the access and mobility management function, the information of the target network element to a terminal.

According to a fourth aspect, an information transmission method is provided, including:
sending, by a model training logical function, information of a target network element corresponding to an ML model to an access and mobility management function or a terminal, where the target network element supports the function of user-plane model transmission.

According to a fifth aspect, an information transmission apparatus is provided, including:
an obtaining module, configured to obtain information of a target network element corresponding to a machine learning ML model, where the target network element supports the function of user-plane model transmission; and
a transmission module, configured to perform model transmission with the target network element via a user plane session or tunnel, where the tunnel is a tunnel established between a terminal and the target network element based on the user plane session, and the model transmission includes at least one of the following:
   receiving information of the ML model from the target network element; and
   sending the information of the ML model to the target network element.

According to a sixth aspect, an information transmission apparatus is provided, including:
a transmission module, configured to perform model transmission with a terminal via a user plane session or tunnel, where a target network element corresponding to the apparatus supports the function of user-plane model transmission, the tunnel is a tunnel established between the target network element and the terminal based on the user plane session, and the model transmission includes at least one of the following:
sending information of the ML model to the terminal; and
receiving the information of the ML model from the terminal.

According to a seventh aspect, an information transmission apparatus is provided, including:
an obtaining module, configured to obtain information of a target network element corresponding to a machine learning ML model, where the target network element supports the function of user-plane model transmission; and
a first sending module, configured to send the information of the target network element to a terminal.

According to an eighth aspect, an information transmission apparatus is provided, including:
a sending module, configured to send information of a target network element corresponding to an ML model to an access and mobility management function or a terminal, where the target network element supports the function of user-plane model transmission.

According to a ninth aspect, a terminal is provided, including a processor and a memory, where the memory stores a program or instructions capable of running on the processor, and when the program or instructions are executed by the processor, the steps of the information transmission method applied on the terminal side according to an embodiment of this application are implemented.

According to a tenth aspect, a terminal is provided, including a processor and a communication interface, where the communication interface is configured to: obtain information of a target network element corresponding to a machine learning ML model, where the target network element supports the function of user-plane model transmission; and perform model transmission with the target network element via a user plane session or tunnel, where the tunnel is a tunnel established between the terminal and the target network element based on the user plane session, and the model transmission includes at least one of the following: receiving information of the ML model from the target network element; and sending the information of the ML model to the target network element.

According to an eleventh aspect, a network-side device is provided. The network-side device is a target network element, including a processor and a memory, where the memory stores a program or instructions capable of running on the processor, and when the program or instructions are executed by the processor, the steps of the information transmission method applied on the target network element side according to an embodiment of this application are implemented.

According to a twelfth aspect, a network-side device is provided. The network-side device is a target network element, including a processor and a communication interface, where the communication interface is configured to perform model transmission with a terminal via a user plane session or tunnel, where the target network element supports the function of user-plane model transmission, the tunnel is a tunnel established between the target network element and the terminal based on the user plane session, and the model transmission includes at least one of the following: sending information of the ML model to the terminal; and receiving the information of the ML model from the terminal.

According to a thirteenth aspect, a network-side device is provided. The network-side device is an access and mobility management function, including a processor and a memory, where the memory stores a program or instructions capable of running on the processor, and when the program or instructions are executed by the processor, the steps of the information transmission method applied on the access and mobility management function side according to an embodiment of this application are implemented.

According to a fourteenth aspect, a network-side device is provided. The network-side device is an access and mobility management function, including a processor and a communication interface, where the communication interface is configured to: obtain information of a target network element corresponding to a machine learning ML model, where the target network element supports the function of user-plane model transmission; and send the information of the target network element to a terminal.

According to a fifteenth aspect, a network-side device is provided. The network-side device is a model training logical function, including a processor and a memory, where the memory stores a program or instructions capable of running on the processor, and when the program or instructions are executed by the processor, the steps of the information transmission method applied on the model training logical function side according to an embodiment of this application are implemented.

According to a sixteenth aspect, a network-side device is provided. The network-side device is a model training logical function, including a processor and a communication interface, where the communication interface is configured to send information of a target network element corresponding to an ML model to an access and mobility management function or a terminal, where the target network element supports the function of user-plane model transmission.

According to a seventeenth aspect, an information transmission system is provided, including a terminal, a target network element, an access and mobility management function, and a model training logical function. The terminal may be configured to perform the steps of the information transmission method applied on the terminal side according to an embodiment of this application, the target network element may be configured to perform the steps of the information transmission method applied on the target network element side according to an embodiment of this application, the access and mobility management function may be configured to perform the steps of the information transmission method applied on the access and mobility management function side according to an embodiment of this application, and the model training logical function may be configured to perform the steps of the information transmission method applied on the model training logical function side according to an embodiment of this application.

According to an eighteenth aspect, a readable storage medium is provided. The readable storage medium stores a program or instructions, and when the program or instructions are executed by a processor, the steps of the information transmission method applied on the terminal side according to an embodiment of this application are implemented, or the information transmission method applied on the target network element side according to an embodiment of this application are implemented, or the steps of the information transmission method applied on the access and mobility management function side according to an embodiment of this application are implemented, or the steps of the information transmission method applied on the model training logical function side according to an embodiment of this application are implemented.

According to a nineteenth aspect, a chip is provided. The chip includes a processor and a communication interface, the communication interface is coupled to the processor, and the processor is configured to run a program or instructions to implement the information transmission method applied on the terminal side, or the information transmission method applied on the target network element side according to an embodiment of this application, or the information transmission method applied on the access and mobility management function side according to an embodiment of this application, or the information transmission method applied on the model training logical function side according to an embodiment of this application.

According to a twentieth aspect, a computer program/program product is provided. The computer program/program product is stored in a storage medium, and the computer program/program product is executed by at least one processor to implement the steps of the information transmission method applied on the terminal side, or the computer program/program product is executed by at least one processor to implement the steps of the information transmission method applied on the target network element side according to an embodiment of this application, or the computer program/program product is executed by at least one processor to implement the steps of the information transmission method applied on the access and mobility management function side according to an embodiment of this application, or the computer program/program product is executed by at least one processor to implement the steps of the information transmission method applied on the model training logical function side according to an embodiment of this application.

In the embodiments of this application, the terminal obtains the information of the target network element corresponding to the ML model, where the target network element supports the function of user-plane model transmission. The terminal performs model transmission with the target network element via a user plane session or tunnel, where the tunnel is a tunnel established between the terminal and the target network element based on the user plane session, and the model transmission includes at least one of the following: downloading the information of the ML model from the target network element; and uploading the information of the ML model to the target network element. In this way, information of an ML model can be transmitted between the terminal and the target network element, thereby improving the model transmission performance of the terminal.

### BRIEF DESCRIPTION OF DRAWINGS

FIG. 1 is a block diagram of a wireless communication system to which embodiments of this application are applicable;
FIG. 2 is a schematic diagram of a model application according to an embodiment of this application;
FIG. 3 is a flowchart of an information transmission method according to an embodiment of this application;
FIG. 4 is a flowchart of another information transmission method according to an embodiment of this application;
FIG. 5 is a flowchart of another information transmission method according to an embodiment of this application;
FIG. 6 is a flowchart of another information transmission method according to an embodiment of this application;
FIG. 7 is a schematic diagram of an information transmission method according to an embodiment of this application;
FIG. 8 is a schematic diagram of another information transmission method according to an embodiment of this application;
FIG. 9 is a structural diagram of an information transmission apparatus according to an embodiment of this application;
FIG. 10 is a structural diagram of another information transmission apparatus according to an embodiment of this application;
FIG. 11 is a structural diagram of another information transmission apparatus according to an embodiment of this application;
FIG. 12 is a structural diagram of another information transmission apparatus according to an embodiment of this application;
FIG. 13 is a structural diagram of a communication device according to an embodiment of this application;
FIG. 14 is a structural diagram of another terminal according to an embodiment of this application; and
FIG. 15 is a schematic structural diagram of another network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The term "indication" in the specification and claims of this application may be an explicit indication or an implicit indication. The explicit indication can be understood as that the sender has clearly informed, in the sent indication, the receiver of the operation to be performed or the requested results. The implicit indication can be understood as that the receiver judges based on the indication from the sender and determines the operation to be performed or the requested results based on the result of the judgment.

It should be noted that the technologies described in the embodiments of this application are not limited to long term evolution (Long Term Evolution, LTE)/LTE-Advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, the 5^{th} generation (5^{th} Generation, 5G) system is described for an illustration purpose, and 5G terms are used in most of the following descriptions, although these technologies may also be applied to other applications than an NR system application, for example, the 6^{th} generation (6^{th} Generation, 6G) communication system.

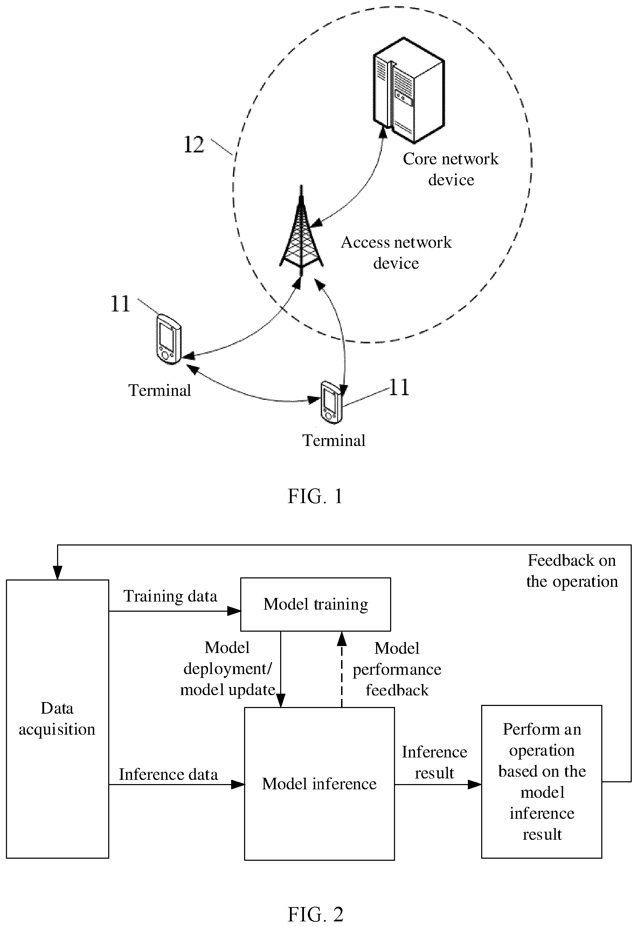

FIG. 1 is a block diagram of a wireless communication system to which embodiments of this application are applicable. The wireless communication system includes a terminal 11 and a network-side device 12. The terminal 11 may be a terminalside device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting and receiving point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function,BSF), an application function (Application Function, AF), and the like. It should be noted that in embodiments of this application, the core network device in an NR system is used only as an example, and the specific type of the core network device is not limited herein.

In some embodiments, an overall process of communication network optimization based on an ML model may be shown in FIG. 2, in which a model training function generates an ML model based on training data, and after a model validity test is completed, the model is deployed to a model inference function. In the process of generating an ML model, the model training function needs to acquire and analyze a large amount of data, which poses high requirements for hardware performance and computing power, and is mainly deployed on a network-side device, for example, an operator's server or a third-party server.

Based on the foregoing ML model, the model inference function uses inference data as input to obtain inference output, for example, an air interface performance prediction. Compared with the model training function, the model inference function has lower requirements for hardware performance and computing power.

In some embodiments, model inference is performed on the terminal side, and even part of model training is also performed on the terminal side.

In some scenarios, model training is performed on the communication network side (for example, a model training logical function or AF), and model inference is performed on the terminal side. In this scenario, a terminal can download the model from the network side.

In other scenarios where part of model training is performed on the terminal side and model inference is performed on the network side or another side, the terminal can transfer a trained model to the network side.

The following describes in detail the information transmission method and apparatus, the terminal, and the network-side device provided in the embodiments of this application by using some embodiments and application scenarios thereof, with reference to the accompanying drawings.

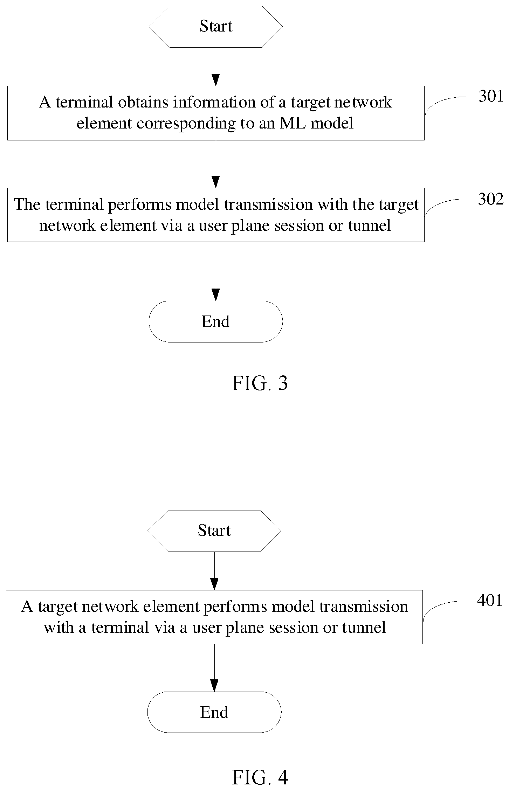

Referring to FIG. 3, FIG. 3 is a flowchart of an information transmission method according to an embodiment of this application. As shown in FIG. 3, the method includes the following steps.

Step 301. A terminal obtains information of a target network element corresponding to an ML model, where the target network element supports the function of user-plane model transmission.

In some embodiments, the target network element may be a user plane network element, and the user plane network element is a network element or functional module that stores models or can provide model instances. The user plane network element may be an independent data repository network element, an analytics data repository function (Analytics Data Repository Function, ADRF), a model application platform, a model store (model store), or the like. Alternatively, the user plane network element may be a functional module, network element, or device that is integrated with or attached to the model training logical function.

In some embodiments, the target network element may also be a network-side device supporting user plane transmission and control plane transmission.

The target network element may store the foregoing ML model. For example, a model generated by the model training logical function (Model Training logical function, MTLF) or another device may be stored in the target network element.

In addition, the foregoing ML model may be provided by a model providing network element (also referred to as a model provider). The model providing network element may be a model training function network element, a model storage function network element, an application server, an open application model (Open Application Model, OAM), or another network element or device that can provide ML models.

In this embodiment of this application, the ML model may be an AI model.

Step 302. The terminal performs model transmission with the target network element via a user plane session or tunnel, where the tunnel is a tunnel established between the terminal and the target network element based on the user plane session, and the model transmission includes at least one of the following:
receiving information of the ML model from the target network element; and
sending the information of the ML model to the target network element.

The user plane session may be a protocol data unit (Protocol Data Unit, PDU) session.

The tunnel may be a secure tunnel established between the terminal and the target network element based on the user plane session.

Receiving information of the ML model from the target network element may also be referred to as downloading the information of the ML model from the target network element.

Sending the information of the ML model to the target network element may also be referred to as uploading the information of the ML model to the target network element.

In this embodiment of this application, through the foregoing steps, information of an ML model can be transmitted between the terminal and the target network element, thereby improving the model transmission performance of the terminal.

In addition, after obtaining the information of the ML model, the terminal can perform model inference based on the information of the ML model, so as to improve the performance of communication service or other services of the terminal. For example, air interface performance prediction is performed based on the information of the ML model or channel information prediction is performed based on the information of the ML model, which is not limited.

In an optional embodiment, the information of the ML model includes at least one of the following:
identification information of the ML model, functionality information of the ML model, type information of the ML model, requirement information of the ML model, model structure information of the ML model, and model parameter information of the ML model.

It should be noted that the model identity (Identity, ID) is used to uniquely identify a requested model instance within a specified range (for example, within a public land mobile network (Public Land Mobile Network, PLMN)), that is, to identify the specific model to be requested. The model functionality information and type information are used to characterize the functionality or usage of the ML model, and may include, for example, model type (model type), data analytics task type (analytic ID), model functionality identifier (model functionality ID), and the like.

In some embodiments, the requirement information of the ML model may include at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

The model transmission latency requirement information may indicate information such as the end time and maximum delay of the ML model transmission reported by a peer end.

The model size requirement information may indicate storage space requirement information for transmitting the ML model.

The sharing indication information for indicating that a model needs to support sharing may indicate that the ML model needs to be shared between different vendors or different functional devices.

The identity constraint information for constraining an identity of a model providing network element may include vendor information, for example, specifying a vendor or vendors generating a model or specifying the model providing network element as a specific device or devices.

The model expression constraint information can specify that an ML model is expressed in some specific languages or based on some specific AI frameworks (AI framework). For example, the commonly used model languages include open neural network exchange (Open Neural Network Exchange, ONNX), PyTorch neural network exchange (pytorch neural network exchange, PNNX), and the like, and AI frameworks include TensorFlow, Pytorch, and the like.

The model performance requirement information may indicate minimum and maximum requirements of a terminal for model accuracy. The model accuracy may be expressed by mean absolute error (Mean absolute error, MAE), minimum mean square error (Minimum mean square error, MMSE) of the model prediction result, or in other forms.

The model usage scope requirement information may indicate the scope information of a model, such as the effective region, applicable data network name (Data Network Name, DNN), applicable slice, and valid time.

In an optional embodiment, the information of the target network element includes at least one of the following:
a fully qualified domain name (Fully Qualified Domain Name, FQDN) of the target network element;
address information of the target network element;
a uniform resource locator (Uniform Resource Locator, URL) where the target network element stores the ML model;
a DNN used by the target network element to transmit the ML model;
single network slice selection assistance information (Single Network Slice Selection Assistance Information, S-NSSAI) used by the target network element to transmit the ML model;
a radio access technology (Radio Access Technology, RAT) type used by the target network element to transmit the ML model;
an access type used by the target network element to transmit the ML model; and
security information related to a user plane tunnel used by the target network element to transmit the ML model.

The URL may indicate a location where the target network element stores a file of the ML model.

The DNN may indicate a DNN corresponding to the user plane session for acquiring the ML model.

The S-NSSAI may indicate an S-NSSAI corresponding to the user plane session for acquiring the ML model.

The RAT type may indicate a RAT type corresponding to the user plane session for acquiring the model.

The access type may indicate an access type corresponding to the user plane session for acquiring the ML model.

The security information may include a security certificate and other security information related to the user plane tunnel.

In this embodiment, the information of the target network element allows the terminal to acquire the peer destination address and other related information for model transmission, so that the terminal can complete the ML model transmission with a peer end via the user plane session.

In some embodiments, the information of the target network element may also include at least one of the following:
an identifier of the target network element, a temporary terminal identifier corresponding to the target network element, and a temporary session identifier corresponding to the target network element. The temporary terminal identifier corresponding to the target network element may be an identifier temporarily allocated by the target network element for identifying the terminal, and the temporary session identifier corresponding to the target network element may be an identifier temporarily allocated by the target network element for identifying the user plane session.

In an optional implementation, the method further includes:
sending, by the terminal, a first message to an access and mobility management function or a model training logical function, where the first message is used to request acquisition of the ML model, or the first message is used to request upload of the ML model.

The first message may be a non-access stratum (Non-Access Stratum, NAS) message, for example, a NAS message for requesting acquisition of the ML model or a NAS message for requesting upload of the ML model.

The NAS message includes at least one of the following:
a terminal registration request;
a model acquisition/subscription request message; and
an uplink NAS transport (UL NAS transport) message.

In some embodiments, in a case that a logical interface or a dedicated protocol stack exists between the terminal and the model training logical function, the first message may be a message directly transmitted between the terminal and the model training logical function. In other words, the information transmitted between the terminal and the model training logical function is transparent to the access and mobility management function, and is not parsed by the access and mobility management function.

In some embodiments, the first message may include at least one of the following:
Internet Protocol (Internet Protocol, IP) address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

The user plane session may be a user plane session selected by the terminal for transmitting the ML model from user plane sessions of an existing data service, or may be a user plane session newly established by the terminal for transmitting the ML model.

The model capability information of the terminal may include at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

The identification information of a model supported by the terminal (for example, UE supported model ID) may be used to uniquely identify a model instance within a specified range.

The functionality information of a model supported by the terminal may be a functionality identifier of the model supported by the terminal (UE supported model type/UE supported analytic ID/supported model functionality ID), and may explain the functionality or usage of the supported model. The functionality information of a model supported by the terminal may also be other descriptive information of the model supported by the terminal, such as usage information.

The type information of a model supported by the terminal may indicate a model type supported by the terminal.

The indication information of model receiving supported by the terminal may be capability indication information indicating whether the terminal supports downloading or receiving a model, for example, whether the terminal can download or receive the model. Further optionally, the capability indication information may change with different model identifiers or model types, that is, the terminal may support downloading or receiving some or all of models corresponding to the model identifiers or model types.

The indication information of model sending supported by the terminal may be capability indication information indicating whether the terminal supports uploading or sending a model, for example, whether the terminal can upload or send the model. Further optionally, the capability indication information may further change with different model identifiers or model types, that is, the terminal may support uploading or sending some or all of models corresponding to the model identifiers or model types.

The user-plane model transmission capability information of the terminal may be whether the terminal supports receiving or sending the ML model via the user plane session. Further optionally, the capability information may further change with different model identifiers or model types, that is, the terminal can receive or send some or all of models corresponding to the model identifiers or model types via the user plane session.

The model storage space information of the terminal may be initial or remaining storage space size of the terminal for storing models.

The identification information of the ML model may indicate an instance of the ML model the terminal is indicated to acquire or upload.

The functionality information of the ML model may indicate the functionality information of the ML model the terminal is indicated to acquire or upload.

The type information of the ML model may indicate the type information of the ML model the terminal is indicated to acquire or upload.

The requirement information of the ML model may indicate the requirement information of the ML model the terminal is indicated to acquire or upload. The requirement information is described in the foregoing embodiments, and is not repeated herein.

The first indication information is used to indicate that the ML model to be acquired or uploaded as requested needs to be transmitted via the user plane session.

In this embodiment, the first message contains at least one of the foregoing, so that the terminal can request acquiring or uploading a more accurate ML model.

In an optional implementation, the method further includes:
sending, by the terminal, a second message to the access and mobility management function or model training logical function, where the second message is used to report or update the model capability information of the terminal.

The second message may be sent to the access and mobility management function or model training logical function during procedures such as registration, PDU session establishment, and PDU session modification, or when the network side sends a capability request (for example, the third message contains indication information for acquiring user-plane model transmission capability).

The second message may be a NAS message, or a message directly transmitted between the terminal and the model training logical function.

The model capability information of the terminal may include at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

In this embodiment, the model capability information of the terminal is reported or updated through the second message, so that the network side can perform corresponding model transmission based on the model capability information of the terminal.

In an optional embodiment, the obtaining, by a terminal, information of a target network element corresponding to an ML model includes:
receiving, by the terminal, a third message from the access and mobility management function or model training logical function, where the third message contains the information of the target network element corresponding to the ML model.

The third message may be a NAS message, or a message directly transmitted between the terminal and the model training logical function.

In this embodiment, the information of the target network element corresponding to the ML model can be obtained by the access and mobility management function or model training logical function.

Optionally, the third message may further include at least one of the following:
first indication information, where the first indication information is used to indicate that the ML model needs to be transmitted via a user plane session; and
indication information for acquiring user-plane model transmission capability.

The indication information for acquiring user-plane model transmission capability can instruct the terminal to report its own capability of using the user plane session to transmit the model.

At least one of the first indication information and indication information for acquiring user-plane model transmission capability can be used to instruct the terminal to transmit the ML model via the user plane. It should be noted that in some embodiments, the ML model may be transmitted via the user plane as agreed by a protocol or pre-configured.

Optionally, the method further includes:
sending, by the terminal, a fourth message to the access and mobility management function or model training logical function, where the fourth message contains the IP address information of the terminal corresponding to the user plane session.

The fourth message may be sent after it is determined that the model needs to be transmitted via the user plane session. For example, after the third message is received, it is determined that the model needs to be transmitted via the user plane session, and the IP address, user-plane model transmission capability information, and the like are reported through the fourth message.

The user plane session may be that after receiving the third message, the terminal selects a user plane session of an existing data service or creates a user plane session for transmitting the ML model, and sends the corresponding IP address information.

It should be noted that in some embodiments, the IP address information of the terminal corresponding to the user plane session may also be sent before the information of the target network element is received, as described in the foregoing embodiments where the first message contains the IP address information of the terminal corresponding to the user plane session.

Optionally, the fourth message further contains:
user-plane model transmission capability information of the terminal.

The user-plane model transmission capability information of the terminal may indicate that the terminal supports user-plane model transmission and further supports model functionality, model types, and the like.

With the user-plane model transmission capability information of the terminal, the network side can transmit the ML model via the user plane session based on the capability information.

In an optional embodiment, the performing, by the terminal, model transmission with the target network element via a user plane session or tunnel includes:
determining, by the terminal based on the information of the target network element, a peer destination address for transmission of the ML model; and
performing, by the terminal, model transmission to the peer destination address via the user plane session or tunnel.

The determining, by the terminal based on the information of the target network element, a peer destination address for transmission of the ML model may include at least one of the following:
determining, by the terminal, an IP address of the target network element based on the FQDN of the target network element, where the terminal uses the IP address of the target network element as the peer destination address;
using, by the terminal, an address of the target network element as the peer destination address; and
determining, by the terminal, the peer destination address based on the URL that the target network element stores the ML model.

The determining, by the terminal, the peer destination address based on the URL that the target network element stores the ML model may be determining an IP address corresponding to a model storage location based on the URL that the target network element stores the ML model and using the IP address as the peer destination address. In this case, the target network element may be a model storage network element, and the information of the target network element is a URL that the model storage network element stores the model.

In this embodiment, the model can be transmitted to the peer destination address based on the user plane session or tunnel.

It should be noted that in some embodiments, the information of the target network element may also be the peer destination address corresponding to the ML model. In other words, the terminal directly transmits the model to the peer destination address directly based on the information of the target network element.

In this embodiment of this application, the terminal obtains the information of the target network element corresponding to the ML model, where the target network element supports the function of user-plane model transmission. The terminal performs model transmission with the target network element via a user plane session or tunnel, where the tunnel is a tunnel established between the terminal and the target network element based on the user plane session, and the model transmission includes at least one of the following: downloading the information of the ML model from the target network element; and uploading the information of the ML model to the target network element. In this way, information of an ML model can be transmitted between the terminal and the target network element, thereby improving the model transmission performance of the terminal.

Referring to FIG. 4, FIG. 4 is a flowchart of another information transmission method according to an embodiment of this application. As shown in FIG. 4, the method includes the following steps.

Step 401. A target network element performs model transmission with a terminal via a user plane session or tunnel, where the target network element supports the function of user-plane model transmission, the tunnel is a tunnel established between the target network element and the terminal based on the user plane session, and the model transmission includes at least one of the following:
sending information of the ML model to the terminal; and
receiving the information of the ML model from the terminal.

Regarding the model transmission between the target network element and the terminal via the user plane session or tunnel, reference may be made to the corresponding description of the embodiment shown in FIG. 3. Details are not provided herein again.

Optionally, the method further includes:
obtaining, by the target network element, at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

The target network element may receive at least one of the foregoing from other devices or network elements.

In some embodiments, the target network element receives from an access and mobility management function or a model training logical function at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

The at least one of the foregoing may be sent by the access and mobility management function or model training logical function to the target network element after receiving a first message from the terminal, where the first message contains at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

It should be noted that in some embodiments, the access and mobility management function or model training logical function may send at least one of the foregoing through one or more messages.

One message contains at least one of the model capability information of the terminal, identification information of the ML model, functionality information of the ML model, type information of the ML model, requirement information of the ML model, and the first indication information, and the other message contains the IP address information of the terminal corresponding to the user plane session.

Depending on at least one of the foregoing, model transmission can be performed between the target network element and the terminal more accurately.

Optionally, the performing, by a target network element, model transmission with a terminal via a user plane session or tunnel includes:
performing, by the target network element based on the IP address information of the terminal, model transmission with the terminal via the user plane session or tunnel.

The performing, by the target network element based on the IP address information of the terminal, model transmission with the terminal via the user plane session or tunnel may be that the IP address information of the terminal is used as a peer destination address corresponding to the ML model and the target network element performs model transmission to the peer destination address via the user plane session or tunnel.

Optionally, the information of the ML model includes at least one of the following:
identification information of the ML model, functionality information of the ML model, type information of the ML model, requirement information of the ML model, model structure information of the ML model, and model parameter information of the ML model.

Optionally, the requirement information of the ML model includes at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

It should be noted that this embodiment is an implementation of the target network element corresponding to the embodiment shown in FIG. 3. For the specific implementation, reference may be made to the related description of the embodiment shown in FIG. 3. To avoid repetition, details are not described again in this embodiment.

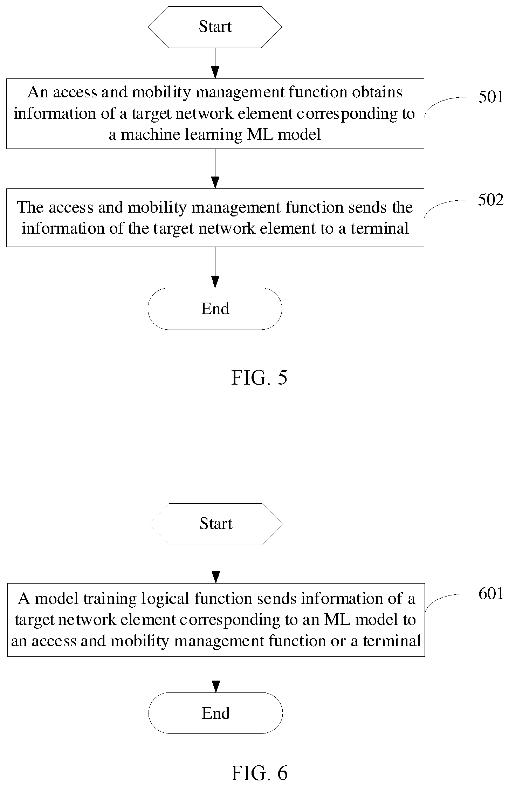

Referring to FIG. 5, FIG. 5 is a flowchart of another information transmission method according to an embodiment of this application. As shown in FIG. 5, the method includes the following steps.

Step 501. An access and mobility management function obtains information of a target network element corresponding to a machine learning ML model, where the target network element supports the function of user-plane model transmission.

Step 502. The access and mobility management function sends the information of the target network element to a terminal.

Regarding the information of the target network element and purpose of the information of the target network element, reference may be made to the corresponding description of the embodiment shown in FIG. 3. Details are not repeated herein.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the method further includes:
receiving, by the access and mobility management function, a first message from the terminal, where the first message is used to request acquisition of the ML model, or the first message is used to request upload of the ML model.

Optionally, the first message contains at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Regarding the first message, reference may be made to the corresponding description of the embodiment shown in FIG. 3. Details are not repeated herein.

Optionally, the obtaining, by an access and mobility management function, information of a target network element corresponding to an ML model includes:
obtaining, by the access and mobility management function based on the first message, the information of the target network element corresponding to the ML model.

The obtaining, by the access and mobility management function based on the first message, the information of the target network element corresponding to the ML model may be determining the ML model based on the first message and then obtaining the information of the target network element corresponding to the ML model.

Optionally, the obtaining, by the access and mobility management function based on the first message, the information of the target network element corresponding to the ML model includes:
sending, by the access and mobility management function to a network repository function, a discovery message for determining the target network element corresponding to the ML model, where the discovery message contains at least one of the following contained in the first message: identification information of the ML model, functionality information of the ML model, type information of the ML model, and indication information of user-plane model transmission; and
receiving, by the access and mobility management function, the information of the target network element from the network repository function.

It should be noted that this embodiment of this application is not limited to that the information of the target network element is determined through the network repository function. For example, in some embodiments, multiple pieces of information of the target network element corresponding to the ML model are pre-configured on the access and mobility management function, so that the access and mobility management function can directly determine the information of the target network element.

Optionally, the method further includes:
determining, by the access and mobility management function, a model providing network element of the ML model based on the first message.

For the model providing network element, reference may be made to the corresponding description of the embodiment shown in FIG. 3. Details are not repeated herein.

The determining a model providing network element of the ML model may be that the model providing network element of the ML model is selected from devices or network elements known by the access and mobility management function, or that the access and mobility management function obtains the model providing network element of the ML model from other devices or network elements.

For example, the determining, by the access and mobility management function, a model providing network element of the ML model based on the first message includes:
sending, by the access and mobility management function to a network repository function, a discovery message for determining the model providing network element of the ML model, where the discovery message contains at least one of the following contained in the first message:
identification information of the ML model, functionality information of the ML model, type information of the ML model, and indication information of user-plane model transmission; and
receiving, by the access and mobility management function, information of the model providing network element from the network repository function.

Optionally, the model providing network element includes a model training logical function or a model training application function, and the method further includes:
sending, by the access and mobility management function, indication information to the model training logical function or model training application function, where the indication information is used to indicate the ML model; and
the obtaining, by an access and mobility management function, information of a target network element corresponding to an ML model includes:
   receiving, by the access and mobility management function, a response message from the model training logical function or model training application function, where the response message contains the information of the target network element corresponding to the ML model.

The indication information may include at least one of the following:
model capability information of the terminal, identification information of the ML model, functionality information of the ML model, type information of the ML model, requirement information of the ML model, indication information of user-plane model transmission, an analytic identifier (Analytic ID), and a notification target address (Notification Target Address) of the ML model; where
the analytic identifier is used to indicate that the ML model is used for a data analysis task corresponding to the analytic identifier; and
the notification target address of the ML model is empty, the notification target address of the ML model is IP address information of the terminal corresponding to a user plane session, or the notification target address is address information of the access and mobility management function.

The analytic identifier may indicate that the requested model is used for a data analysis task corresponding to an analytic ID. Optionally, the analytic identifier is obtained through determining or mapping by the AMF based on the model functionality type of the ML model requested by the terminal.

The reason why the notification target address of the ML model is empty may be that the IP address information of the terminal is not known for the access and mobility management function. In this case, the notification target address may be set to be empty or address information corresponding to the access and mobility management function.

In this embodiment, the information of the target network element can be obtained through the model training logical function or model training application function.

Optionally, the response message further contains:
first indication information, where the first indication information is used to indicate that the ML model needs to be transmitted via a user plane session.

Optionally, the obtaining, by an access and mobility management function, information of a target network element corresponding to an ML model includes:
obtaining, by the access and mobility management function, the information of the target network element corresponding to the ML model from a network repository function.

In this embodiment, the information of the target network element corresponding to the ML model may be directly obtained by the network repository function.

Optionally, the method further includes:
receiving, by the access and mobility management function, a second message from the terminal, where the second message is used to report or update the model capability information of the terminal.

Optionally, the model capability information of the terminal includes at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

Regarding the second message, reference may be made to the corresponding description of the embodiment shown in FIG. 3. Details are not repeated herein.

Optionally, the sending, by the access and mobility management function, the information of the target network element to a terminal includes:
sending, by the access and mobility management function, a third message to the terminal, where the third message contains the information of the target network element corresponding to the ML model and further includes at least one of the following:
first indication information, where the first indication information is used to indicate that the ML model needs to be transmitted via a user plane session; and
indication information for acquiring user-plane model transmission capability.

For the third message, reference may be made to the corresponding description of the embodiment shown in FIG. 3. Details are not repeated herein.

Optionally, the method further includes:
receiving, by the access and mobility management function, a fourth message from the terminal, where the fourth message contains the IP address information of the terminal corresponding to the user plane session.

Regarding the fourth message, reference may be made to the corresponding description of the embodiment shown in FIG. 3. Details are not repeated herein.

Optionally, the fourth message further contains:
user-plane model transmission capability information of the terminal.

The method further includes:
sending, by the access and mobility management function, a fifth message to the model training logical function or target network element, where the fifth message contains at least one of the following:
IP address information of the terminal corresponding to the user plane session; and
user-plane model transmission capability information of the terminal.

It should be noted that this embodiment is an implementation of the access and mobility management function corresponding to the embodiment shown in FIG. 3. For the specific implementation, reference may be made to the related description of the embodiment shown in FIG. 3. To avoid repetition, details are not described again in this embodiment.

Referring to FIG. 6, FIG. 6 is a flowchart of another information transmission method according to an embodiment of this application. As shown in FIG. 6, the method includes the following steps.

Step 601. A model training logical function sends information of a target network element corresponding to an ML model to an access and mobility management function or a terminal, where the target network element supports the function of user-plane model transmission.

Regarding the information of the target network element and purpose of the information of the target network element, reference may be made to the corresponding description of the embodiment shown in FIG. 3. Details are not repeated herein.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the method further includes:
receiving, by the model training logical function, a first message from the terminal, where the first message is used to request acquisition of the ML model, or the first message is used to trigger upload of the ML model.

The first message may be sent by the terminal directly to the model training logical function, or may be transferred by the access and mobility management function and the message may possibly be changed during the transfer.

Optionally, the first message contains at least one of the following:
IP address information of the terminal corresponding to a user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Regarding the first message, reference may be made to the corresponding description of the embodiment shown in FIG. 3. Details are not repeated herein.

Optionally, the method further includes:
receiving, by the model training logical function, indication information from the access and mobility management function, where the indication information is used to indicate the ML model; and
the sending, by a model training logical function, information of a target network element corresponding to an ML model to an access and mobility management function includes:
   sending, by the model training logical function, a response message to the access and mobility management function, where the response message contains the information of the target network element corresponding to the ML model.

Optionally, the indication information includes at least one of the following:
model capability information of the terminal, identification information of the ML model, functionality information of the ML model, type information of the ML model, requirement information of the ML model, indication information of user-plane model transmission, an analytic identifier, and a notification target address of the ML model; where
the analytic identifier is used to indicate that the ML model is used for a data analysis task corresponding to the analytic identifier; and
the notification target address of the ML model is empty, the notification target address of the ML model is IP address information of the terminal corresponding to a user plane session, or the notification target address is address information of the access and mobility management function.

Regarding the indication information and response message, reference may be made to the corresponding description of the embodiment shown in FIG. 5. Details are not repeated herein.

Optionally, the method further includes:
determining, by the model training logical function, the information of the target network element based on the first message or indication information.

The determining the information of the target network element based on the first message or indication information may be selecting the target network element from devices or network elements known by the model training logical function, or may be that the model training logical function obtains the information of the target network element from other devices or network elements.

For example, the determining, by the model training logical function, the information of the target network element based on the first message or indication information includes:
sending, by the model training logical function to a network repository function, a discovery message for determining the target network element corresponding to the ML model, where the discovery message contains at least one of the following: identification information of the ML model, functionality information of the ML model, type information of the ML model, and indication information of user-plane model transmission; and
receiving, by the model training logical function, the information of the target network element from the network repository function.

For another example, the determining, by the model training logical function, the information of the target network element based on the first message or indication information includes:
sending, by the model training logical function, an information request message to a model storage network element, where the information request message is used to request the model storage network element to report the information of the target network element corresponding to the ML model; and
receiving, by the model training logical function, the information of the target network element corresponding to the ML model from the model storage network element, where the information of the target network element includes a URL that the model storage network element stores the ML model.

The model storage network element may be the target network element, and the information of the target network element may be a URL that the target network element stores the model.

Optionally, the response message further contains:
first indication information, where the first indication information is used to indicate that the ML model needs to be transmitted via a user plane session.

Optionally, the method further includes at least one of the following:
determining, by the model training logical function, that the ML model is transmitted in a user plane manner;
obtaining, by the model training logical function, the information of the target network element; and
receiving, by the model training logical function, a fifth message from the access and mobility management function, where the fifth message contains at least one of the following:
   IP address information of the terminal corresponding to the user plane session; and
   user-plane model transmission capability information of the terminal.

The model training logical function may determine that the ML model is transmitted in a user plane manner, based on at least one of these factors, such as local policy, control plane load, user plane load, user-plane model transmission capability information of the terminal, size requirement of the requested model, and transmission latency requirement.

The obtaining, by the model training logical function, the information of the target network element may be that the model training logical function directly obtains the information of the target network element.

It should be noted that this embodiment is an implementation of the network-side device corresponding to the embodiment shown in FIG. 3. For the specific implementation, reference may be made to the related description of the embodiment shown in FIG. 3. To avoid repeated descriptions, details are not repeated in this embodiment.

The following describes the information transmission method provided in the embodiments of this application by using a plurality of embodiments as examples.

### Embodiment 1:

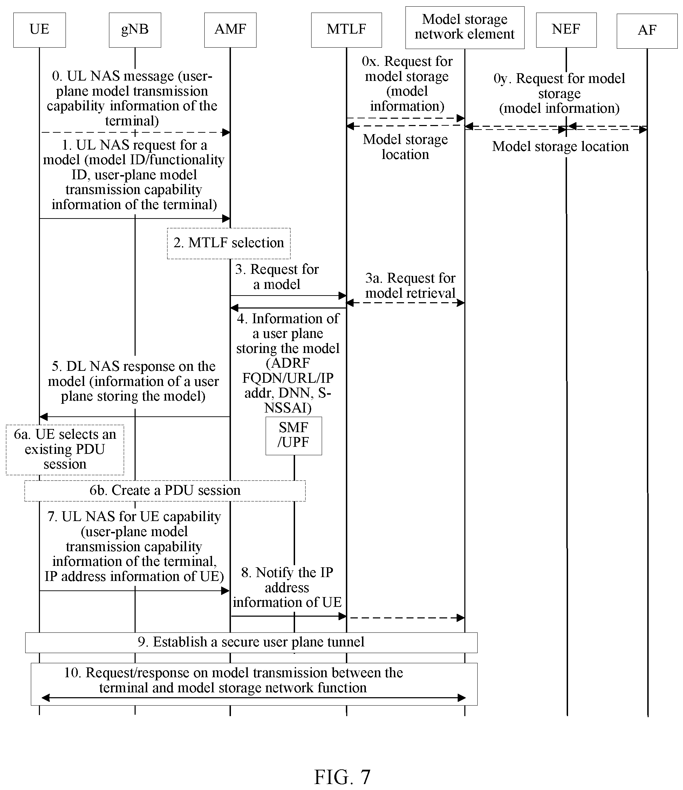

As shown in FIG. 7, this embodiment includes the following steps.

Step 0. Optionally, before Step 1, a UE initiates a NAS message to an AMF, where the NAS message is used to report/update ML model capability information of the UE.

The ML model capability information of the UE may include:
identification information of a model supported by the UE (for example, UE supported model ID), where the model ID is used to uniquely identify a model instance within a specified range;
a functionality type or other descriptive information of a model supported by the UE; for example, UE supported model type/model functionality identifier (UE supported model type/UE supported analytic ID/supported model functionality ID), used to explain the functionality or usage of the supported model;
capability indication information of model receiving and/or sending supported by the UE; for example, whether the UE supports model receiving and/or sending, where further optionally, the capability indication information may change with different model IDs or model types;
user-plane model transmission (receiving/sending) capability information of the UE; for example, whether the UE supports sending or receiving the ML model through a user plane PDU session, where further optionally, the capability information may change with different model IDs or model types; and
model storage space information of the UE, for example, initial or remaining storage space size of the UE for storing models.

Step 1. The UE initiates a NAS message to the AMF, where the NAS message is used to request acquisition of an ML model.

The NAS message for requesting acquisition of a model includes at least one of the following:
ML model capability information of the UE, which is specifically described in Step 0;
model ID of the ML model requested by the UE;
model functionality type of the ML model requested by the UE;
requirement information of the ML model requested by the UE; and
indication information of user-plane model transmission, used to indicate to the network that the requested model needs to be transmitted via a user plane PDU session.

The requirement information of the ML model includes at least one of the following:
transmission latency requirement information, used to instruct the network to report information such as the end time and maximum delay of the model;
model size requirement information, used to instruct the network to report the storage space requirement information of the model;
sharing indication information, used to indicate that the model needs to be shared between different vendors or different devices;
vendor or supplier identity constraint information, used to specify a vendor or vendors generating the model or specify the model providing network element as a specific device or devices;
model expression constraint information, used to specify that a model is expressed in some specific languages or based on some specific AI frameworks; for example, commonly used model languages include ONNX, PNNX, and the like, and AI frameworks include TensorFlow, Pytorch, and the like;
model performance requirement information, used to indicate minimum and maximum requirements of the UE for model accuracy; and
model usage scope constraint information, used to indicate the scope information of a model, such as the effective region, applicable DNN, applicable slice, and valid time.

Step 2. Optionally, the AMF selects a model providing network element based on the model request message from the UE.

The model providing network elements in the network may specifically be a network element or device capable of providing AI/ML models, such as a model training function, a model storage function network element, an application server, and an OAM.

Specifically, in an implementation, the AMF discovers and selects the model providing network element from an NRF based on at least one of the following information, and the model providing network element matches the following information. The AMF may provide the NRF with at least one of the following information:
model ID of the ML model requested by the UE, used to indicate that the selected model providing network element can provide the ML model corresponding to the model ID;
model functionality type of the ML model requested by the UE, used to indicate that the selected model providing network element can provide the ML model corresponding to the model functionality type; and
indication information of user-plane model transmission, used to indicate to the network that the requested model needs to be transmitted via a user plane PDU session and the selected model providing network element can transmit the model via the user plane PDU session.

Step 3. Assuming that the model providing network element in Step 2 is an MTLF, the AMF sends a first request message to the MTLF to indicate to the MTLF the model requested by the UE.

Optionally, for the content of the first request message, refer to the content of the NAS message in Step 1.

In addition, the first request message may further contain other information related to model transmission, for example, at least one of the following:
analytic ID (Analytic ID), used to indicate that the requested model is used for a data analysis task corresponding to an analytic ID, where optionally, the analytic ID is obtained through determining or mapping by the AMF based on the model functionality type of the ML model requested by the UE; and
a notification target address (A Notification Target Address), where in this embodiment, since the AMF does not know the IP address information of the UE, optionally, the Notification Target Address may be left empty or set to the address information corresponding to the AMF.

Step 4. The MTLF returns a first response message to the AMF, which contains information of a user plane network element corresponding to the requested model.

The user plane network element refers to a network element or functional module that stores the model or can provide model instances, and the user plane network element supports ML model transmission with the terminal via a user plane session. In actual deployment, the user plane network element may be an independent data repository element (for example, an ADRF, a model application platform, or a model store model store), and models generated by the MTLF or other devices can be stored in this data repository. In another deployment mode, the user plane network element may be a functional module integrated with or attached to the MTLF.

Specifically, the information of the user plane network element includes at least one of the following information of the user plane network element:
an FQDN of the user plane network element;
address information (IP address, media access control (Media Access Control, MAC) address, or the like) of the user plane network element;
a URL, for example, being used to indicate a location where the user plane network element stores the model file;
a DNN, used to indicate the DNN corresponding to the user plane session acquiring the model;
an S-NSSAI, used to indicate the S-NSSAI corresponding to the user plane session acquiring the model;
a RAT Type, used to indicate the RAT Type corresponding to the user plane session acquiring the model;
an Access Type, used to indicate the access type corresponding to the user plane session acquiring the model; and
security information related to the user plane tunnel, including a security certificate.

Optionally, the first response message may contain indication information of user-plane model transmission used to indicate that the requested model needs to be transmitted via a user plane PDU session.

Optionally, before sending the first response message, the MTLF determines that the model is transmitted in a user plane manner, based on at least one of these factors, such as local policy, control plane load, user plane load, user-plane model transmission (receiving/sending) capability information, size requirement of the requested model, and transmission latency requirement.

Step 3a. Optionally, before sending the first response message, if the requested model is stored in the user plane network element, the MTLF requests model storage information from the user plane network element to determine the information of the user plane network element corresponding to the model.

For example, the user plane network element storing the ML model is an ADRF, and the MTLF sends a request message to the ADRF to obtain the storage address information of the model file. The ADRF reports to the MTLF the URL that the model file is stored, and the URL corresponds to the information of the user plane network element.

Step 5. Based on the first response message, the AMF sends to the UE a NAS message containing the information of the user plane network element corresponding to the model.

Optionally, the NAS message further contains at least one of the following information:
indication information of user-plane model transmission, used to indicate that the requested model needs to be transmitted via a user plane PDU session; and
indication information for acquiring user-plane model transmission capability of the UE, used to instruct the UE to report its own capability of using the user plane PDU session to transmit the model.

Step 6. The UE selects an existing PDU session or creates a PDU session for transmitting the model.

Before that, the UE may determine its capability of user-plane model transmission.

Step 7. The UE sends to the AMF a NAS message containing IP address information of the UE corresponding to the PDU session selected in Step 6.

Optionally, the NAS message further contains user-plane model transmission capability information of the UE.

Step 8. The AMF sends to the MTLF the IP address information of the UE and optionally the user-plane model transmission capability information of the UE.

Specifically, the AMF may set A Notification Target Address in Step 3 as the IP address information of the UE.

Optionally, the MTLF forwards to the user plane network element (ADRF) the IP address information of the UE and optionally the user-plane model transmission capability information of the UE.

Step 9. Optionally, based on the PDU session, a secure tunnel is established between the UE and the user plane network element.

Step 10. Based on the PDU session or secure tunnel, model-related signaling exchange and/or model transmission are performed between the UE and the user plane network element.

Such signaling exchange refers to that at least one of the following information of the model is exchanged between the UE and the user plane network element via the PDU session:
model ID of the ML model;
model functionality type of the ML model; and
requirement information of the ML model (for details, see the explanation in Step 1).

In addition, model transmission means that the UE downloads from the ADRF or uploads to the ADRF, via a PDU session, model information including model structure information and/or model parameter information.

### Embodiment 2:

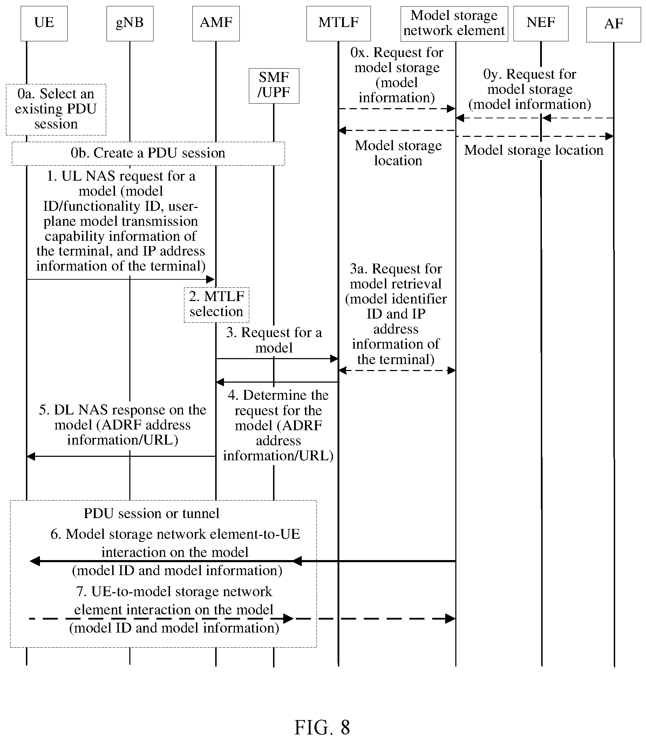

The basic process of this embodiment is similar to that of embodiment 1, with the difference being that before requesting a model, the UE has determined its capability of user-plane model transmission and the PDU session for model transmission. When requesting a model, the UE may directly report its IP address information and optionally user-plane model transmission capability information of the UE. As shown in FIG. 8, the method includes the following steps.

Step 0. The UE selects an existing PDU session or creates a PDU session for transmitting the model.

Before that, the UE may determine its capability of user-plane model transmission.

Step 1. The UE initiates a NAS message to the AMF, where the NAS message is used to request acquisition of an ML model.

For details, refer to the NAS message in the embodiment 1. The NAS message in this embodiment further contains the IP address information of the UE corresponding to the PDU session in Step 0.

Step 2. Same as Step 2 in embodiment 1.

Step 3. Similar to Step 3 in embodiment 1, with the difference being that the first request message further contains the IP address information of the UE.

Specifically, the AMF may set Notification Target Address in first request message as the IP address of the UE.

Step 3a. Similar to Step 3a in Embodiment 1, with the difference being that the request message sent by the MTLF to the ADRF further contains the IP address information of the UE.

Step 4. Same as Step 4 in Embodiment 1.

Step 5. Same as Step 5 in Embodiment 1.

Step 6. Same as Step 10 in Embodiment 1. Based on the PDU session, model-related signaling exchange and/or model transmission are performed between the UE and the user plane network element.

Before that, a secure tunnel is established between the UE and the user plane network element based on the PDU session.

In this embodiment of this application, the UE can obtain the download address or location information of an AI model on the network, and dynamically download the model from the network via the user plane PDU session.

The network can also obtain the IP address information of the UE, and dynamically upload the model from the UE via the user plane PDU session.

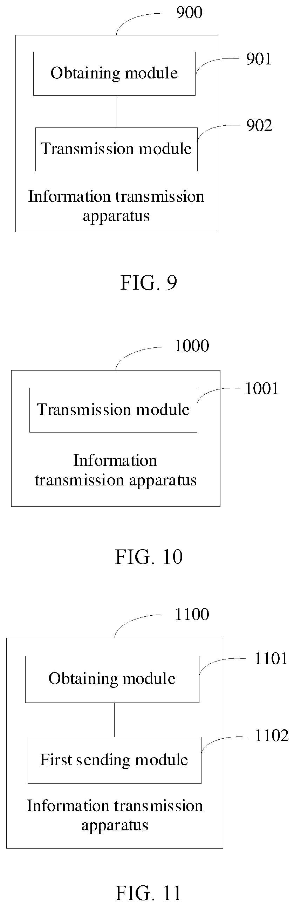

Referring to FIG. 9, FIG. 9 is a structural diagram of an information transmission apparatus according to an embodiment of this application. As shown in FIG. 9, an information transmission apparatus 900 includes:
an obtaining module 901, configured to obtain information of a target network element corresponding to a machine learning ML model, where the target network element supports the function of user-plane model transmission; and
a transmission module 902, configured to perform model transmission with the target network element via a user plane session or tunnel, where the tunnel is a tunnel established between a terminal and the target network element based on the user plane session, and the model transmission includes at least one of the following:
   receiving information of the ML model from the target network element; and
   sending the information of the ML model to the target network element.

Optionally, the information of the ML model includes at least one of the following:
identification information of the ML model, functionality information of the ML model, type information of the ML model, requirement information of the ML model, model structure information of the ML model, and model parameter information of the ML model.

Optionally, the requirement information of the ML model includes at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the apparatus further includes:
a first sending module, configured to send a first message to an access and mobility management function or a model training logical function, where the first message is used to request acquisition of the ML model, or the first message is used to request upload of the ML model.

Optionally, the first message contains at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the apparatus further includes:
a second sending module, configured to send a second message to the access and mobility management function or model training logical function, where the second message is used to report or update the model capability information of the terminal.

Optionally, the model capability information of the terminal includes at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

Optionally, the obtaining module 901 is configured to:
receive a third message from the access and mobility management function or model training logical function, where the third message contains the information of the target network element corresponding to the ML model.

Optionally, the third message further contains at least one of the following:
first indication information, where the first indication information is used to indicate that the ML model needs to be transmitted via a user plane session; and
indication information for acquiring user-plane model transmission capability.

Optionally, the apparatus further includes:
a third sending module, configured to send a fourth message to the access and mobility management function or model training logical function, where the fourth message contains the IP address information of the terminal corresponding to the user plane session.

Optionally, the fourth message further contains:
user-plane model transmission capability information of the terminal.

Optionally, the transmission module 902 is configured to:
determine, based on the information of the target network element, a peer destination address for transmission of the ML model; and
perform model transmission to the peer destination address via the user plane session or tunnel.

Optionally, the determining, based on the information of the target network element, a peer destination address for transmission of the ML model includes at least one of the following:
determining an IP address of the target network element based on the FQDN of the target network element, where the terminal uses the IP address of the target network element as the peer destination address;
using an address of the target network element as the peer destination address; and
determining the peer destination address based on the URL that the target network element stores the ML model.

The information transmission apparatus can improve the model transmission performance of the terminal.

The information transmission apparatus according to the embodiment of this application may be an electronic device, for example, an electronic device with an operating system, or may be a component in an electronic device, for example, an integrated circuit or a chip. For example, the electronic device may be a terminal or another device except the terminal. For example, the terminal may include but is not limited to a type of the terminal listed in the embodiments of this application, and another device may be a server, a network attached storage (Network Attached Storage, NAS), or the like, which is not specifically limited in the embodiments of this application.

The information transmission apparatus provided in this embodiment of this application can implement the processes of the method embodiment illustrated in FIG. 3, with the same technical effects. To avoid repetition, details are not described herein again.

Referring to FIG. 10, FIG. 10 is a structural diagram of an information transmission apparatus according to an embodiment of this application. As shown in FIG. 10, an information transmission apparatus 1000 includes:
a transmission module 1001, configured to perform model transmission with a terminal via a user plane session or tunnel, where a target network element corresponding to the apparatus supports the function of user-plane model transmission, the tunnel is a tunnel established between the target network element and the terminal based on the user plane session, and the model transmission includes at least one of the following:
sending information of the ML model to the terminal; and
receiving the information of the ML model from the terminal.

The target network element corresponding to the apparatus may be the target network element to which the apparatus belongs, or the apparatus is the target network element.

Optionally, the apparatus further includes:
an obtaining module, configured to obtain at least one of the following:
IP address information of the terminal corresponding to a user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the obtaining module receives from an access and mobility management function or a model training logical function at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the transmission module 1001 is configured to:
perform, based on the IP address information of the terminal, model transmission with the terminal via the user plane session or tunnel.

Optionally, the information of the ML model includes at least one of the following:
identification information of the ML model, functionality information of the ML model, type information of the ML model, requirement information of the ML model, model structure information of the ML model, and model parameter information of the ML model.

Optionally, the requirement information of the ML model includes at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

The information transmission apparatus can improve the model transmission performance of the terminal.

The information transmission apparatus according to the embodiment of this application may be an electronic device, for example, an electronic device with an operating system, or may be a component in an electronic device, for example, an integrated circuit or a chip. The electronic device may be a terminal or a network-side device.

The information transmission apparatus provided in this embodiment of this application can implement the processes of the method embodiment illustrated in FIG. 4, with the same technical effects. To avoid repetition, details are not described herein again.

Referring to FIG. 11, FIG. 11 is a structural diagram of an information transmission apparatus according to an embodiment of this application. As shown in FIG. 11, an information transmission apparatus 1100 includes:
an obtaining module 1101, configured to obtain information of a target network element corresponding to a machine learning ML model, where the target network element supports the function of user-plane model transmission; and
a first sending module 1102, configured to send the information of the target network element to a terminal.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the apparatus further includes:
a first receiving module, configured to receive a first message from the terminal, where the first message is used to request acquisition of the ML model, or the first message is used to request upload of the ML model.

Optionally, the first message contains at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the obtaining module 1101 is configured to:
obtain, based on the first message, the information of the target network element corresponding to the ML model.

Optionally, the obtaining module 1101 is configured to:
send to a network repository function a discovery message for determining the target network element corresponding to the ML model, where the discovery message contains at least one of the following contained in the first message: identification information of the ML model, functionality information of the ML model, type information of the ML model, and indication information of user-plane model transmission; and
receive the information of the target network element from the network repository function.

Optionally, the apparatus further includes:
a determining module, configured to determine a model providing network element of the ML model based on the first message.

Optionally, the determining module is configured to:
send to a network repository function a discovery message for determining the model providing network element of the ML model, where the discovery message contains at least one of the following contained in the first message:
identification information of the ML model, functionality information of the ML model, type information of the ML model, and indication information of user-plane model transmission; and
receive information of the model providing network element from the network repository function.

Optionally, the model providing network element includes a model training logical function or a model training application function, and the apparatus further includes:
a second sending module, configured to send indication information to the model training logical function or model training application function, where the indication information is used to indicate the ML model; and
an obtaining module 1101, configured to:
   receive a response message from the model training logical function or model training application function, where the response message contains the information of the target network element corresponding to the ML model.

Optionally, the indication information includes at least one of the following:
model capability information of the terminal, identification information of the ML model, functionality information of the ML model, type information of the ML model, requirement information of the ML model, indication information of user-plane model transmission, an analytic identifier, and a notification target address of the ML model; where
the analytic identifier is used to indicate that the ML model is used for a data analysis task corresponding to the analytic identifier; and
the notification target address of the ML model is empty, the notification target address of the ML model is IP address information of the terminal corresponding to a user plane session, or the notification target address is address information of the access and mobility management function.

Optionally, the response message further contains:
first indication information, where the first indication information is used to indicate that the ML model needs to be transmitted via a user plane session.

Optionally, the obtaining module 1101 is configured to:
obtain the information of the target network element corresponding to the ML model from a network repository function.

Optionally, the apparatus further includes:
a second receiving module, configured to receive a second message from the terminal, where the second message is used to report or update the model capability information of the terminal.

Optionally, the model capability information of the terminal includes at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

Optionally, the first sending module 1102 is configured to:
send a third message to the terminal, where the third message contains the information of the target network element corresponding to the ML model and further includes at least one of the following:
first indication information, where the first indication information is used to indicate that the ML model needs to be transmitted via a user plane session; and
indication information for acquiring user-plane model transmission capability.

Optionally, the apparatus further includes:
a third receiving module, configured to receive a fourth message from the terminal, where the fourth message contains the IP address information of the terminal corresponding to the user plane session.

Optionally, the fourth message further contains:
user-plane model transmission capability information of the terminal.

The apparatus further includes:
a third sending module, configured to send a fifth message to the model training logical function or target network element, where the fifth message contains at least one of the following:
IP address information of the terminal corresponding to the user plane session; and
user-plane model transmission capability information of the terminal.

The information transmission apparatus can improve the model transmission performance of the terminal.

The information transmission apparatus according to the embodiment of this application may be an electronic device, for example, an electronic device with an operating system, or may be a component in an electronic device, for example, an integrated circuit or a chip. The electronic device may be a terminal or a network-side device.

The information transmission apparatus provided in this embodiment of this application can implement the processes of the method embodiment illustrated in FIG. 5, with the same technical effects. To avoid repetition, details are not described herein again.

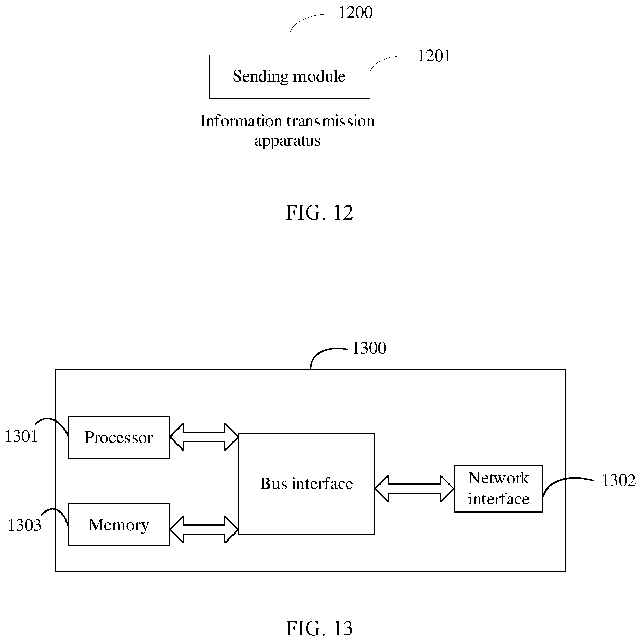

Referring to FIG. 12, FIG. 12 is a structural diagram of an information transmission apparatus according to an embodiment of this application. As shown in FIG. 12, an information transmission apparatus 1200 includes:
a sending module 1201, configured to send information of a target network element corresponding to an ML model to an access and mobility management function or a terminal, where the target network element supports the function of user-plane model transmission.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the apparatus further includes:
a first receiving module, configured to receive a first message from the terminal, where the first message is used to request acquisition of the ML model, or the first message is used to trigger upload of the ML model.

Optionally, the first message contains at least one of the following:
IP address information of the terminal corresponding to a user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the apparatus further includes:
a second receiving module, configured to receive indication information from the access and mobility management function, where the indication information is used to indicate the ML model; and
a sending module 1201, configured to:
   send a response message to the access and mobility management function, where the response message contains the information of the target network element corresponding to the ML model.

Optionally, the indication information includes at least one of the following:
model capability information of the terminal, identification information of the ML model, functionality information of the ML model, type information of the ML model, requirement information of the ML model, indication information of user-plane model transmission, an analytic identifier, and a notification target address of the ML model; where
the analytic identifier is used to indicate that the ML model is used for a data analysis task corresponding to the analytic identifier; and
the notification target address of the ML model is empty, the notification target address of the ML model is IP address information of the terminal corresponding to a user plane session, or the notification target address is address information of the access and mobility management function.

Optionally, the apparatus further includes:
a first determining module, configured to determine the information of the target network element based on the first message or indication information.

Optionally, the first determining module is configured to:
send to a network repository function a discovery message for determining the target network element corresponding to the ML model, where the discovery message contains at least one of the following: identification information of the ML model, functionality information of the ML model, type information of the ML model, and indication information of user-plane model transmission; and
receive the information of the target network element from the network repository function.

Optionally, the first determining module is configured to:
send an information request message to a model storage network element, where the information request message is used to request the model storage network element to report the information of the target network element corresponding to the ML model; and
receive the information of the target network element corresponding to the ML model from the model storage network element, where the information of the target network element includes a URL that the model storage network element stores the ML model.

Optionally, the response message further contains:
first indication information, where the first indication information is used to indicate that the ML model needs to be transmitted via a user plane session.

Optionally, the apparatus further includes at least one of the following:
a second determining module, configured to determine that the ML model is transmitted in a user plane manner;
an obtaining module, configured to obtain information of the target network element; and
a third receiving module, configured to receive a fifth message from the access and mobility management function, where the fifth message contains at least one of the following:
   IP address information of the terminal corresponding to the user plane session; and
   user-plane model transmission capability information of the terminal.

The information transmission apparatus can improve the model transmission performance of the terminal.

The information transmission apparatus according to the embodiment of this application may be an electronic device, for example, an electronic device with an operating system, or may be a component in an electronic device, for example, an integrated circuit or a chip. The electronic device may be a terminal or a network-side device.

The information transmission apparatus provided in this embodiment of this application can implement the processes of the method embodiment illustrated in FIG. 6, with the same technical effects. To avoid repetition, details are not described herein again.

Optionally, as shown in FIG. 13, an embodiment of this application further provides a communication device 1300 including a processor 1301 and a memory 1302, and a program or instructions are stored in the memory 1302 and capable of running on the processor 1301. For example, in a case that the communication device 1300 is a terminal, when the program or instructions are executed by the processor 1301, the steps in the foregoing embodiments of the information transmission method applied on the terminal side are implemented, with the same technical effects achieved. In a case that the communication device 1300 is a network-side device, when the program or instructions are executed by the processor 1301, the steps in the forgoing embodiments of the information transmission method applied on the network side are implemented, with the same technical effects achieved. To avoid repetition, details are not described herein again.

An embodiment of this application further provides a communication device, including a processor and a communication interface, where the communication interface is configured to obtain information of a target network element corresponding to a machine learning ML model, where the target network element supports the function of user-plane model transmission; and the communication interface is configured to perform model transmission with the target network element via a user plane session or tunnel, where the tunnel is a tunnel established between the terminal and the target network element based on the user plane session, and the model transmission includes at least one of the following: receiving information of the ML model from the target network element; and sending the information of the ML model to the target network element. The communication device embodiment is corresponding to the foregoing embodiments of the information transmission method. All the implementation processes and implementation methods of the foregoing method embodiments can be applied to the communication device embodiment, with the same technical effects achieved.

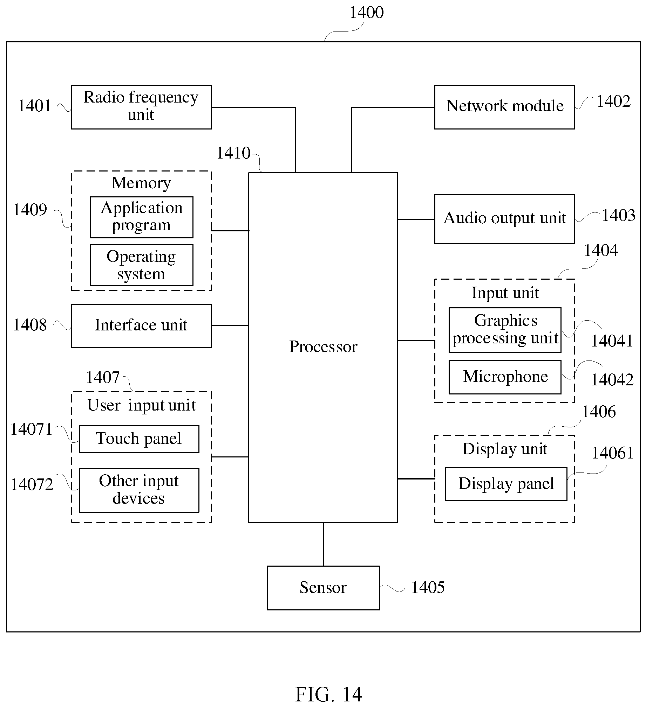

Specifically, FIG. 14 is a schematic diagram of a hardware structure of a terminal implementing the embodiments of this application.

The terminal 1400 includes but is not limited to at least some components of a radio frequency unit 1401, a network module 1402, an audio output unit 1403, an input unit 1404, a sensor 1405, a display unit 1406, a user input unit 1407, an interface unit 1408, a memory 1409, and a processor 1410.

Persons skilled in the art can understand that the terminal 1400 may further include a power source (for example, a battery) for supplying power to the components. The power source may be logically connected to the processor 1410 through a power management system. In this way, functions such as charge management, discharge management, and power consumption management are implemented by using the power management system. The structure of the terminal shown in FIG. 14 does not constitute a limitation on the terminal. The terminal may include more or fewer components than shown in the figure, or combine some components, or have a different component arrangement. Details are not described herein again.

It should be understood that in the embodiments of this application, the input unit 1404 may include a graphics processing unit (Graphics Processing Unit, GPU) 14041 and a microphone 14042. The graphics processing unit 14041 processes image data of a static picture or a video that is obtained by an image capture apparatus (for example, a camera) in a video capture mode or an image capture mode. The display unit 1406 may include a display panel 14061. The display panel 14061 may be configured in a form of a liquid crystal display, an organic light-emitting diode, or the like. The user input unit 1407 includes at least one of a touch panel 14071 and other input devices 14072. The touch panel 14071 is also referred to as a touchscreen. The touch panel 14071 may include two parts: a touch detection apparatus and a touch controller. The other input devices 14072 may include but are not limited to a physical keyboard, a functional button (such as a volume control button or a power on/off button), a trackball, a mouse, and a joystick. Details are not described herein again.

In the embodiments of this application, after receiving downlink data from the network-side device, the radio frequency unit 1401 may transmit it to the processor 1410 for processing. In addition, the radio frequency unit 1401 may transmit uplink data to the network-side device. Generally, the radio frequency unit 1401 includes but is not limited to an antenna, an amplifier, a transceiver, a coupler, a low noise amplifier, a duplexer, and the like.

The memory 1409 may be configured to store software program or instructions, and various data. The memory 1409 may mainly include a first storage area where the program or instructions are stored and a second storage area where data is stored. The first storage area may store an operating system, an application program or instructions required by at least one function (for example, an audio playing function or an image playing function), and the like. Further, the memory 1409 may include a volatile memory or non-volatile memory, or the memory 1409 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1409 in this embodiment of this application includes but is not limited to these and any other suitable types of memories.

The processor 1410 may include one or more processing units. Optionally, the processor 1410 integrates an application processor and a modem processor. The application processor mainly processes operations involving an operating system, a user interface, an application program, and the like. The modem processor mainly processes wireless communication signals, for example, a baseband processor. It can be understood that the modem processor may alternatively be not integrated in the processor 1410.

The radio frequency unit 1401 is configured to:
obtain information of a target network element corresponding to a machine learning ML model, where the target network element supports the function of user-plane model transmission; and
perform model transmission with the target network element via a user plane session or tunnel, where the tunnel is a tunnel established between the terminal and the target network element based on the user plane session, and the model transmission includes at least one of the following:
   receiving information of the ML model from the target network element; and
   sending the information of the ML model to the target network element.

Optionally, the information of the ML model includes at least one of the following:
identification information of the ML model, functionality information of the ML model, type information of the ML model, requirement information of the ML model, model structure information of the ML model, and model parameter information of the ML model.

Optionally, the requirement information of the ML model includes at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the radio frequency unit 1401 is further configured to:
send a first message to an access and mobility management function or a model training logical function, where the first message is used to request acquisition of the ML model, or the first message is used to request upload of the ML model.

Optionally, the first message contains at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the radio frequency unit 1401 is further configured to:
send a second message to the access and mobility management function or model training logical function, where the second message is used to report or update the model capability information of the terminal.

Optionally, the model capability information of the terminal includes at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

Optionally, the obtaining information of a target network element corresponding to a machine learning ML model includes:
receiving a third message from the access and mobility management function or model training logical function, where the third message contains the information of the target network element corresponding to the ML model.

Optionally, the third message further contains at least one of the following:
first indication information, where the first indication information is used to indicate that the ML model needs to be transmitted via a user plane session; and
indication information for acquiring user-plane model transmission capability.

Optionally, the radio frequency unit 1401 is further configured to:
send a fourth message to the access and mobility management function or model training logical function, where the fourth message contains the IP address information of the terminal corresponding to the user plane session.

Optionally, the fourth message further contains:
user-plane model transmission capability information of the terminal.

Optionally, the performing model transmission with the target network element via a user plane session or tunnel includes:
determining, based on the information of the target network element, a peer destination address for transmission of the ML model; and
performing model transmission to the peer destination address via the user plane session or tunnel.

Optionally, the determining, based on the information of the target network element, a peer destination address for transmission of the ML model includes at least one of the following:
determining an IP address of the target network element based on the FQDN of the target network element, where the terminal uses the IP address of the target network element as the peer destination address;
using an address of the target network element as the peer destination address; and
determining the peer destination address based on the URL that the target network element stores the ML model.

The terminal can improve the data transmission performance of the terminal.

An embodiment of this application further provides a communication device, including a processor and a communication interface, where the communication interface is configured to perform model transmission with a terminal via a user plane session or tunnel, where the target network element supports the function of user-plane model transmission, the tunnel is a tunnel established between the target network element and the terminal based on the user plane session, and the model transmission includes at least one of the following: sending information of the ML model to the terminal; and receiving the information of the ML model from the terminal. Alternatively, the communication interface is configured to: obtain information of a target network element corresponding to a machine learning ML model, where the target network element supports the function of user-plane model transmission; and send the information of the target network element to a terminal. Alternatively, the communication interface is configured to send information of a target network element corresponding to an ML model to an access and mobility management function or a terminal, where the target network element supports the function of user-plane model transmission. The communication device embodiment is corresponding to the foregoing embodiments of the information transmission method. All the implementation processes and implementation methods of the foregoing method embodiments can be applied to the communication device embodiment, with the same technical effects achieved.

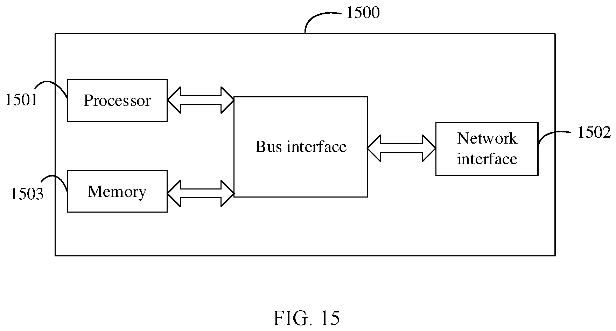

Specifically, an embodiment of this application further provides a network-side device. As shown in FIG. 15, the network-side device 1500 includes a processor 1501, a network interface 1502, and a memory 1503. For example, the network interface 1502 is a common public radio interface (common public radio interface, CPRI).

Specifically, the network-side device 1500 according to the embodiment of this invention further includes a program or instructions stored in the memory 1503 and capable of running on the processor 1501. The processor 1501 invokes the program or instructions in the memory 1503 to implement the method performed by each module shown in any one of FIG. 10 to FIG. 12, with the same technical effects achieved. To avoid repetition, details are not described herein again.

In the embodiment where the network-side device is the target network element:
the network interface 1502 performs model transmission with a terminal via a user plane session or tunnel, where the target network element supports the function of user-plane model transmission, the tunnel is a tunnel established between the target network element and the terminal based on the user plane session, and the model transmission includes at least one of the following:
sending information of the ML model to the terminal; and
receiving the information of the ML model from the terminal.

Optionally, the network interface 1502 is further configured to:
obtain at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the network interface 1502 receives from an access and mobility management function or a model training logical function at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the performing model transmission with a terminal via a user plane session or tunnel includes:
performing, based on the IP address information of the terminal, model transmission with the terminal via the user plane session or tunnel.

Optionally, the information of the ML model includes at least one of the following:
identification information of the ML model, functionality information of the ML model, type information of the ML model, requirement information of the ML model, model structure information of the ML model, and model parameter information of the ML model.

Optionally, the requirement information of the ML model includes at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

In the embodiment where the network-side device is an access and mobility management function:
the network interface 1502 is configured to: obtain information of a target network element corresponding to a machine learning ML model, where the target network element supports the function of user-plane model transmission; and send the information of the target network element to a terminal.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the network interface 1502 is further configured to:
receive a first message from the terminal, where the first message is used to request acquisition of the ML model, or the first message is used to request upload of the ML model.

Optionally, the first message contains at least one of the following:
IP address information of the terminal corresponding to the user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the obtaining information of a target network element corresponding to an ML model includes:
obtaining, based on the first message, the information of the target network element corresponding to the ML model.

Optionally, the obtaining, based on the first message, the information of the target network element corresponding to the ML model includes:
sending to a network repository function a discovery message for determining the target network element corresponding to the ML model, where the discovery message contains at least one of the following contained in the first message: identification information of the ML model, functionality information of the ML model, type information of the ML model, and indication information of user-plane model transmission; and
receiving the information of the target network element from the network repository function.

Optionally, the network interface 1502 is further configured to:
determine a model providing network element of the ML model based on the first message.

Optionally, the determine a model providing network element of the ML model based on the first message includes:
sending to a network repository function a discovery message for determining the model providing network element of the ML model, where the discovery message contains at least one of the following contained in the first message:
identification information of the ML model, functionality information of the ML model, type information of the ML model, and indication information of user-plane model transmission; and
receiving, by the access and mobility management function, information of the model providing network element from the network repository function.

Optionally, the model providing network element includes a model training logical function or a model training application function, and the network interface 1502 is further configured to:
send indication information to the model training logical function or model training application function, where the indication information is used to indicate the ML model; and
the obtaining information of a target network element corresponding to an ML model includes:
   receiving a response message from the model training logical function or model training application function, where the response message contains the information of the target network element corresponding to the ML model.

Optionally, the indication information includes at least one of the following:
model capability information of the terminal, identification information of the ML model, functionality information of the ML model, type information of the ML model, requirement information of the ML model, indication information of user-plane model transmission, an analytic identifier, and a notification target address of the ML model; where
the analytic identifier is used to indicate that the ML model is used for a data analysis task corresponding to the analytic identifier; and
the notification target address of the ML model is empty, the notification target address of the ML model is IP address information of the terminal corresponding to a user plane session, or the notification target address is address information of the access and mobility management function.

Optionally, the response message further contains:
first indication information, where the first indication information is used to indicate that the ML model needs to be transmitted via a user plane session.

Optionally, the obtaining information of a target network element corresponding to an ML model includes:
obtaining the information of the target network element corresponding to the ML model from a network repository function.

Optionally, the network interface 1502 is further configured to:
receive a second message from the terminal, where the second message is used to report or update the model capability information of the terminal.

Optionally, the model capability information of the terminal includes at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

Optionally, the sending the information of the target network element to a terminal includes:
sending a third message to the terminal, where the third message contains the information of the target network element corresponding to the ML model and further includes at least one of the following:
first indication information, where the first indication information is used to indicate that the ML model needs to be transmitted via a user plane session; and
indication information for acquiring user-plane model transmission capability.

Optionally, the network interface 1502 is further configured to:
receive a fourth message from the terminal, where the fourth message contains the IP address information of the terminal corresponding to the user plane session.

Optionally, the fourth message further contains:
user-plane model transmission capability information of the terminal.

The network interface 1502 is further configured to:
send a fifth message to the model training logical function or target network element, where the fifth message contains at least one of the following:
IP address information of the terminal corresponding to the user plane session; and
user-plane model transmission capability information of the terminal.

In the embodiment where the network-side device is the target network element:
the network interface 1502 is configured to send information of a target network element corresponding to an ML model to an access and mobility management function or a terminal, where the target network element supports the function of user-plane model transmission.

Optionally, the information of the target network element includes at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

Optionally, the network interface 1502 is further configured to:
receive a first message from the terminal, where the first message is used to request acquisition of the ML model, or the first message is used to trigger upload of the ML model.

Optionally, the first message contains at least one of the following:
IP address information of the terminal corresponding to a user plane session, model capability information of the terminal, identification information of the ML model, functionality information of the ML model, type information of the ML model, requirement information of the ML model, and first indication information, where the first indication information is used to indicate that the ML model needs to be transmitted via a user plane session.

Optionally, the network interface 1502 is further configured to:
receive indication information from the access and mobility management function, where the indication information is used to indicate the ML model; and
the sending information of a target network element corresponding to an ML model to an access and mobility management function includes:
   sending a response message to the access and mobility management function, where the response message contains the information of the target network element corresponding to the ML model.

Optionally, the indication information includes at least one of the following:
model capability information of the terminal, identification information of the ML model, functionality information of the ML model, type information of the ML model, requirement information of the ML model, indication information of user-plane model transmission, an analytic identifier, and a notification target address of the ML model; where
the analytic identifier is used to indicate that the ML model is used for a data analysis task corresponding to the analytic identifier; and
the notification target address of the ML model is empty, the notification target address of the ML model is IP address information of the terminal corresponding to a user plane session, or the notification target address is address information of the access and mobility management function.

Optionally, the network interface 1502 is further configured to:
determine the information of the target network element based on the first message or indication information.

Optionally, the determining the information of the target network element based on the first message or indication information includes:
sending to a network repository function a discovery message for determining the target network element corresponding to the ML model, where the discovery message contains at least one of the following: identification information of the ML model, functionality information of the ML model, type information of the ML model, and indication information of user-plane model transmission; and
receiving, by the model training logical function, the information of the target network element from the network repository function.

Optionally, the determining the information of the target network element based on the first message or indication information includes:
sending an information request message to a model storage network element, where the information request message is used to request the model storage network element to report the information of the target network element corresponding to the ML model; and
receiving the information of the target network element corresponding to the ML model from the model storage network element, where the information of the target network element includes a URL that the model storage network element stores the ML model.

Optionally, the response message further contains:
first indication information, where the first indication information is used to indicate that the ML model needs to be transmitted via a user plane session.

Optionally, the network interface 1502 is further configured to perform at least one of the following:
determining that the ML model is transmitted in a user plane manner;
obtaining information of the target network element; and
receiving a fifth message from the access and mobility management function, where the fifth message contains at least one of the following:
   IP address information of the terminal corresponding to the user plane session; and
   user-plane model transmission capability information of the terminal.

An embodiment of this application further provides a readable storage medium. The readable storage medium stores a program or instructions, and when the program or instructions are executed by a processor, the steps of the information transmission method applied on the terminal side according to an embodiment of this application are implemented, or the information transmission method applied on the target network element side according to an embodiment of this application are implemented, or the steps of the information transmission method applied on the access and mobility management function side according to an embodiment of this application are implemented, or the steps of the information transmission method applied on the model training logical function side according to an embodiment of this application are implemented.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the information transmission method applied on the terminal side according to an embodiment of this application, or the information transmission method applied on the target network element side according to an embodiment of this application, or the information transmission method applied on the access and mobility management function side according to an embodiment of this application, or the information transmission method applied on the model training logical function side according to an embodiment of this application.

It should be understood that the chip mentioned in this embodiment of this application may also be referred to as a system-level chip, a system chip, a chip system, a system-on-chip, or the like.

An embodiment of this application further provides a computer program/program product. The computer program/program product is stored in a storage medium, and the computer program/program product is executed by at least one processor to implement the steps of the information transmission method applied on the terminal side according to an embodiment of this application, or the computer program/program product is executed by at least one processor to implement the steps of the information transmission method applied on the target network element side according to an embodiment of this application, or the computer program/program product is executed by at least one processor to implement the steps of the information transmission method applied on the access and mobility management function side according to an embodiment of this application, or the computer program/program product is executed by at least one processor to implement the steps of the information transmission method applied on the model training logical function side according to an embodiment of this application.

An embodiment of this application further provides an information transmission system, including a terminal, a target network element, an access and mobility management function, and a model training logical function. The terminal may be configured to perform the steps of the information transmission method applied on the terminal side according to an embodiment of this application, the target network element may be configured to perform the steps of the information transmission method applied on the target network element side according to an embodiment of this application, the access and mobility management function may be configured to perform the steps of the information transmission method applied on the access and mobility management function side according to an embodiment of this application, and the model training logical function may be configured to perform the steps of the information transmission method applied on the model training logical function side according to an embodiment of this application.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information transmission method, comprising:
obtaining, by a terminal, information of a target network element corresponding to a machine learning ML model, wherein the target network element supports a function of user-plane model transmission; and
performing, by the terminal, model transmission with the target network element via a user plane session or tunnel, wherein the tunnel is a tunnel established between the terminal and the target network element based on the user plane session, and the model transmission comprises at least one of the following:
receiving information of the ML model from the target network element; and
sending the information of the ML model to the target network element.

2. The method according to claim 1, wherein the information of the ML model comprises at least one of the following:
identification information of the ML model, functionality information of the ML model, type information of the ML model, requirement information of the ML model, model structure information of the ML model, and model parameter information of the ML model.

3. The method according to claim 2, wherein the requirement information of the ML model comprises at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

4. The method according to claim 1, wherein the information of the target network element comprises at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

5. The method according to claim 1, wherein the method further comprises:
sending, by the terminal, a first message to an access and mobility management function or a model training logical function, wherein the first message is used to request acquisition of the ML model, or the first message is used to request upload of the ML model.

6. The method according to claim 5, wherein the first message contains at least one of the following:
IP address information of the terminal corresponding to the user plane session, model capability information of the terminal, identification information of the ML model, functionality information of the ML model, type information of the ML model, requirement information of the ML model, and first indication information, wherein the first indication information is used to indicate that the ML model needs to be transmitted via a user plane session.

7. The method according to any one of claims 1 to 6, wherein the method further comprises:
sending, by the terminal, a second message to the access and mobility management function or model training logical function, wherein the second message is used to report or update the model capability information of the terminal.

8. The method according to claim 7, wherein the model capability information of the terminal comprises at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

9. The method according to any one of claims 1 to 6, wherein the obtaining, by a terminal, information of a target network element corresponding to a machine learning ML model comprises:
receiving, by the terminal, a third message from the access and mobility management function or model training logical function, wherein the third message contains the information of the target network element corresponding to the ML model.

10. The method according to claim 9, wherein the third message further contains at least one of the following:
first indication information, wherein the first indication information is used to indicate that the ML model needs to be transmitted via a user plane session; and
indication information for acquiring user-plane model transmission capability.

11. The method according to claim 9, wherein the method further comprises:
sending, by the terminal, a fourth message to the access and mobility management function or model training logical function, wherein the fourth message contains the IP address information of the terminal corresponding to the user plane session.

12. The method according to claim 11, wherein the fourth message further contains:
user-plane model transmission capability information of the terminal.

13. The method according to any one of claims 1 to 6, wherein the performing, by the terminal, model transmission with the target network element via a user plane session or tunnel comprises:
determining, by the terminal based on the information of the target network element, a peer destination address for transmission of the ML model; and
performing, by the terminal, model transmission to the peer destination address via the user plane session or tunnel.

14. The method according to claim 13, wherein the determining, by the terminal based on the information of the target network element, a peer destination address for transmission of the ML model comprises at least one of the following:
determining, by the terminal, an IP address of the target network element based on the FQDN of the target network element, wherein the terminal uses the IP address of the target network element as the peer destination address;
using, by the terminal, an address of the target network element as the peer destination address; and
determining, by the terminal, the peer destination address based on the URL that the target network element stores the ML model.

15. An information transmission method, comprising:
performing, by a target network element, model transmission with a terminal via a user plane session or tunnel, wherein the target network element supports a function of user-plane model transmission, the tunnel is a tunnel established between the target network element and the terminal based on the user plane session, and the model transmission comprises at least one of the following:
sending information of an ML model to the terminal; and
receiving the information of the ML model from the terminal.

16. The method according to claim 15, wherein the method further comprises:
obtaining, by the target network element, at least one of the following:
IP address information of the terminal corresponding to the user plane session, model capability information of the terminal, identification information of the ML model, functionality information of the ML model, type information of the ML model, requirement information of the ML model, and first indication information, wherein the first indication information is used to indicate that the ML model needs to be transmitted via a user plane session.

17. The method according to claim 16, wherein the target network element receives from an access and mobility management function or a model training logical function at least one of the following:
IP address information of the terminal corresponding to the user plane session, model capability information of the terminal, identification information of the ML model, functionality information of the ML model, type information of the ML model, requirement information of the ML model, and first indication information, wherein the first indication information is used to indicate that the ML model needs to be transmitted via a user plane session.

18. The method according to claim 16, wherein the performing, by a target network element, model transmission with a terminal via a user plane session or tunnel comprises:
performing, by the target network element based on the IP address information of the terminal, model transmission with the terminal via the user plane session or tunnel.

19. The method according to claim 15, wherein the information of the ML model comprises at least one of the following:
identification information of the ML model, functionality information of the ML model, type information of the ML model, requirement information of the ML model, model structure information of the ML model, and model parameter information of the ML model.

20. The method according to claim 19, wherein the requirement information of the ML model comprises at least one of the following:
model transmission latency requirement information, model size requirement information, sharing indication information for indicating that a model needs to support sharing, identity constraint information for constraining an identity of a model providing network element, model expression constraint information, model performance requirement information, and model usage scope requirement information.

21. An information transmission method, comprising:
obtaining, by an access and mobility management function, information of a target network element corresponding to a machine learning ML model, wherein the target network element supports a function of user-plane model transmission; and
sending, by the access and mobility management function, the information of the target network element to a terminal.

22. The method according to claim 21, wherein the information of the target network element comprises at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

23. The method according to claim 21, wherein the method further comprises:
receiving, by the access and mobility management function, a first message from the terminal, wherein the first message is used to request acquisition of the ML model, or the first message is used to request upload of the ML model.

24. The method according to claim 23, wherein the first message contains at least one of the following:
IP address information of the terminal corresponding to the user plane session, model capability information of the terminal, identification information of the ML model, functionality information of the ML model, type information of the ML model, requirement information of the ML model, and first indication information, wherein the first indication information is used to indicate that the ML model needs to be transmitted via a user plane session.

25. The method according to claim 23, wherein the obtaining, by an access and mobility management function, information of a target network element corresponding to an ML model comprises:
obtaining, by the access and mobility management function based on the first message, the information of the target network element corresponding to the ML model.

26. The method according to claim 25, wherein the obtaining, by the access and mobility management function based on the first message, the information of the target network element corresponding to the ML model comprises:
sending, by the access and mobility management function to a network repository function, a discovery message for determining the target network element corresponding to the ML model, wherein the discovery message contains at least one of the following contained in the first message: identification information of the ML model, functionality information of the ML model, type information of the ML model, and indication information of user-plane model transmission; and
receiving, by the access and mobility management function, the information of the target network element from the network repository function.

27. The method according to claim 23, wherein the method further comprises:
determining, by the access and mobility management function, a model providing network element of the ML model based on the first message.

28. The method according to claim 27, wherein the determining, by the access and mobility management function, a model providing network element of the ML model based on the first message comprises:
sending, by the access and mobility management function to a network repository function, a discovery message for determining the model providing network element of the ML model, wherein the discovery message contains at least one of the following contained in the first message:
identification information of the ML model, functionality information of the ML model, type information of the ML model, and indication information of user-plane model transmission; and
receiving, by the access and mobility management function, information of the model providing network element from the network repository function.

29. The method according to claim 28, wherein the model providing network element comprises a model training logical function or a model training application function, and the method further comprises:
sending, by the access and mobility management function, indication information to the model training logical function or model training application function, wherein the indication information is used to indicate the ML model; and
the obtaining, by an access and mobility management function, information of a target network element corresponding to an ML model comprises:
receiving, by the access and mobility management function, a response message from the model training logical function or model training application function, wherein the response message contains the information of the target network element corresponding to the ML model.

30. The method according to claim 29, wherein the indication information comprises at least one of the following:
model capability information of the terminal, identification information of the ML model, functionality information of the ML model, type information of the ML model, requirement information of the ML model, indication information of user-plane model transmission, an analytic identifier, and a notification target address of the ML model; wherein
the analytic identifier is used to indicate that the ML model is used for a data analysis task corresponding to the analytic identifier; and
the notification target address of the ML model is empty, or the notification target address of the ML model is IP address information of the terminal corresponding to a user plane session, or the notification target address is address information of the access and mobility management function.

31. The method according to claim 29, wherein the response message further contains:
first indication information, wherein the first indication information is used to indicate that the ML model needs to be transmitted via a user plane session.

32. The method according to claim 23, wherein the obtaining, by an access and mobility management function, information of a target network element corresponding to an ML model comprises:
obtaining, by the access and mobility management function, the information of the target network element corresponding to the ML model from a network repository function.

33. The method according to any one of claims 21 to 32, wherein the method further comprises:
receiving, by the access and mobility management function, a second message from the terminal, wherein the second message is used to report or update the model capability information of the terminal.

34. The method according to claim 33, wherein the model capability information of the terminal comprises at least one of the following:
identification information of a model supported by the terminal;
functionality information of a model supported by the terminal;
type information of a model supported by the terminal;
indication information of model receiving supported by the terminal;
indication information of model sending supported by the terminal;
user-plane model transmission capability information of the terminal; and
model storage space information of the terminal.

35. The method according to any one of claims 21 to 32, wherein the sending, by the access and mobility management function, the information of the target network element to a terminal comprises:
sending, by the access and mobility management function, a third message to the terminal, wherein the third message contains the information of the target network element corresponding to the ML model and further contains at least one of the following:
first indication information, wherein the first indication information is used to indicate that the ML model needs to be transmitted via a user plane session; and
indication information for acquiring user-plane model transmission capability.

36. The method according to claim 35, wherein the method further comprises:
receiving, by the access and mobility management function, a fourth message from the terminal, wherein the fourth message contains the IP address information of the terminal corresponding to the user plane session.

37. The method according to claim 36, wherein the fourth message further contains:
user-plane model transmission capability information of the terminal; and
the method further comprises:
sending, by the access and mobility management function, a fifth message to the model training logical function or target network element, wherein the fifth message contains at least one of the following:
IP address information of the terminal corresponding to the user plane session; and
user-plane model transmission capability information of the terminal.

38. An information transmission method, comprising:
sending, by a model training logical function, information of a target network element corresponding to an ML model to an access and mobility management function or a terminal, wherein the target network element supports a function of user-plane model transmission.

39. The method according to claim 38, wherein the information of the target network element comprises at least one of the following:
a fully qualified domain name FQDN of the target network element;
address information of the target network element;
a uniform resource locator URL that the target network element stores the ML model;
a data network name DNN used by the target network element to transmit the ML model;
single network slice selection assistance information S-NSSAI used by the target network element to transmit the ML model;
a radio access technology RAT type used by the target network element to transmit the ML model;
an access type used by the target network element to transmit the ML model; and
security information related to a user plane tunnel used by the target network element to transmit the ML model.

40. The method according to claim 38, wherein the method further comprises:
receiving, by the model training logical function, a first message from the terminal, wherein the first message is used to request acquisition of the ML model, or the first message is used to trigger upload of the ML model.

41. The method according to claim 40, wherein the first message contains at least one of the following:
IP address information of the terminal corresponding to a user plane session, model capability information of the terminal, identification information of the ML model, functionality information of the ML model, type information of the ML model, requirement information of the ML model, and first indication information, wherein the first indication information is used to indicate that the ML model needs to be transmitted via a user plane session.

42. The method according to claim 38, wherein the method further comprises:
receiving, by the model training logical function, indication information from the access and mobility management function, wherein the indication information is used to indicate the ML model; and
the sending, by a model training logical function, information of a target network element corresponding to an ML model to an access and mobility management function comprises:
sending, by the model training logical function, a response message to the access and mobility management function, wherein the response message contains the information of the target network element corresponding to the ML model.

43. The method according to claim 42, wherein the indication information comprises at least one of the following:
model capability information of the terminal, identification information of the ML model, functionality information of the ML model, type information of the ML model, requirement information of the ML model, indication information of user-plane model transmission, an analytic identifier, and a notification target address of the ML model; wherein
the analytic identifier is used to indicate that the ML model is used for a data analysis task corresponding to the analytic identifier; and
the notification target address of the ML model is empty, or the notification target address of the ML model is IP address information of the terminal corresponding to a user plane session, or the notification target address is address information of the access and mobility management function.

44. The method according to claim 40 or 42, wherein the method further comprises:
determining, by the model training logical function, the information of the target network element based on the first message or indication information.

45. The method according to claim 44, wherein the determining, by the model training logical function, the information of the target network element based on the first message or indication information comprises:
sending, by the model training logical function to a network repository function, a discovery message for determining the target network element corresponding to the ML model, wherein the discovery message contains at least one of the following: identification information of the ML model, functionality information of the ML model, type information of the ML model, and indication information of user-plane model transmission; and
receiving, by the model training logical function, the information of the target network element from the network repository function.

46. The method according to claim 44, wherein the determining, by the model training logical function, the information of the target network element based on the first message or indication information comprises:
sending, by the model training logical function, an information request message to a model storage network element, wherein the information request message is used to request the model storage network element to report the information of the target network element corresponding to the ML model; and
receiving, by the model training logical function, the information of the target network element corresponding to the ML model from the model storage network element, wherein the information of the target network element comprises a URL that the model storage network element stores the ML model.

47. The method according to claim 42, wherein the response message further contains:
first indication information, wherein the first indication information is used to indicate that the ML model needs to be transmitted via a user plane session.

48. The method according to any one of claims 38 to 43, wherein the method further comprises at least one of the following:
determining, by the model training logical function, that the ML model is transmitted in a user plane manner;
obtaining, by the model training logical function, the information of the target network element; and
receiving, by the model training logical function, a fifth message from the access and mobility management function, wherein the fifth message contains at least one of the following:
IP address information of the terminal corresponding to the user plane session; and
user-plane model transmission capability information of the terminal.

49. An information transmission apparatus, comprising:
an obtaining module, configured to obtain information of a target network element corresponding to a machine learning ML model, wherein the target network element supports a function of user-plane model transmission; and
a transmission module, configured to perform model transmission with the target network element via a user plane session or tunnel, wherein the tunnel is a tunnel established between a terminal and the target network element based on the user plane session, and the model transmission comprises at least one of the following:
receiving information of the ML model from the target network element; and
sending the information of the ML model to the target network element.

50. An information transmission apparatus, comprising:
a transmission module, configured to perform model transmission with a terminal via a user plane session or tunnel, wherein a target network element corresponding to the apparatus supports a function of user-plane model transmission, the tunnel is a tunnel established between the target network element and the terminal based on the user plane session, and the model transmission comprises at least one of the following:
sending information of an ML model to the terminal; and
receiving the information of the ML model from the terminal.

51. An information transmission apparatus, comprising:
an obtaining module, configured to obtain information of a target network element corresponding to a machine learning ML model, wherein the target network element supports a function of user-plane model transmission; and
a first sending module, configured to send the information of the target network element to a terminal.

52. An information transmission apparatus, comprising:
a sending module, configured to send information of a target network element corresponding to an ML model to an access and mobility management function or a terminal, wherein the target network element supports a function of user-plane model transmission.

53. A terminal, comprising a processor and a memory, wherein a program or instructions capable of running on the processor are stored in the memory, and when the program or instructions are executed by the processor, the steps of the information transmission method according to any one of claims 1 to 14 are implemented.

54. A network-side device, wherein the network-side device is a target network element comprising a processor and a memory, wherein a program or instructions capable of running on the processor are stored in the memory, and when the program or instructions are executed by the processor, the steps of the information transmission method according to any one of claims 15 to 20 are implemented.

55. A network-side device, wherein the network-side device is an access and mobility management function comprising a processor and a memory, wherein a program or instructions capable of running on the processor are stored in the memory, and when the program or instructions are executed by the processor, the steps of the information transmission method according to any one of claims 21 to 37 are implemented.

56. A network-side device, wherein the network-side device is a model training logical function comprising a processor and a memory, wherein a program or instructions capable of running on the processor are stored in the memory, and when the program or instructions are executed by the processor, the steps of the information transmission method according to any one of claims 38 to 48 are implemented.

57. A readable storage medium, wherein the readable storage medium stores a program or instructions, and when the program or instructions are executed by a processor, the steps of the information transmission method according to any one of claims 1 to 14 are implemented, or the steps of the information transmission method according to any one of claims 15 to 20 are implemented, or the steps of the information transmission method according to any one of claims 21 to 37 are implemented, or the steps of the information transmission method according to claims 38 to 48 are implemented.
